(19) **Europäisches Patentamt / European Patent Office / Office européen des brevets**

(11) **EP 3 844 561 B1**

(12) **EUROPEAN PATENT SPECIFICATION**

(45) Date of publication and mention
of the grant of the patent:
**29.01.2025  Bulletin 2025/05**

(21) Application number: **19881802.3**

(22) Date of filing: **06.11.2019**

(51) International Patent Classification (IPC):
**G02C 7/00** *(2006.01)*     **G02C 7/02** *(2006.01)*
**G02C 7/04** *(2006.01)*     **G02C 11/00** *(2006.01)*
**H01F 27/00** *(2006.01)*

(52) Cooperative Patent Classification (CPC):
**G02C 7/047; G02C 7/049; G02C 11/10; H01F 38/14**

(86) International application number:
**PCT/US2019/060071**

(87) International publication number:
**WO 2020/097205 (14.05.2020 Gazette 2020/20)**

(54) **OXYGEN PERMEABLE SCLERAL CONTACT LENSES WITH THICK PAYLOADS**

SAUERSTOFFDURCHLÄSSIGE SKLERALE KONTAKTLINSEN MIT DICKEN NUTZLASTEN

LENTILLES DE CONTACT SCLÉRALES PERMÉABLES À L'OXYGÈNE À CHARGES UTILES ÉPAISSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **08.11.2018   US 201816184242
21.03.2019   US 201916360872
31.10.2019   US 201916670515**

(43) Date of publication of application:
**07.07.2021   Bulletin 2021/27**

(73) Proprietor: **Tectus Corporation
Cupertino, CA 95014 (US)**

(72) Inventors:
• **HACKETT, Benjamin, Lyle
Saratoga, CA 95070 (US)**
• **ICE, Donald, Arthur
Saratoga, CA 95070 (US)**

• **JOHNSON, Eric
Saratoga, CA 95070 (US)**
• **WIEMER, Michael, West
Saratoga, CA 95070 (US)**
• **HAN, Allen, Ming-kuang
Saratoga, CA 95070 (US)**

(74) Representative: **Boult Wade Tennant LLP
Salisbury Square House
8 Salisbury Square
London EC4Y 8AP (GB)**

(56) References cited:
**US-A- 3 973 838**     **US-A- 6 106 553**
**US-A1- 2012 232 649**     **US-A1- 2013 308 092**
**US-A1- 2014 192 315**     **US-A1- 2016 379 054**
**US-A1- 2017 299 892**     **US-A1- 2018 088 350**
**US-A1- 2018 224 671**     **US-A1- 2018 224 671**
**US-A1- 2018 316 224**     **US-B2- 9 310 627**
**US-B2- 9 740 026**

**Description**

BACKGROUND

1. Technical Field

This disclosure relates generally to contact lenses and in particular to oxygen permeable thick contact lenses, for example scleral contact lenses that carry electronic payloads.

2. Description of Related Art

Contact lenses that provide refractive vision correction are commonplace. Most contact lenses in use today are so-called soft contact lenses. They are relatively thin and made of oxygen permeable hydrogels. Oxygen passes through the contact lens material to the cornea. Sufficient oxygen supply is an important requirement for any contact lens because, due to the lack of blood vessels within the human cornea, the tissue that makes up the cornea receives oxygen through exposure to the air. Without a sufficient flow of oxygen through the contact lens, the cornea would suffer.

Recently, there has been increased interest in contact lenses that perform functions other than vision correction. In many of these applications, a contact lens may carry a payload for performing various functions. For example, a contact lens may contain a payload of one or more electrical components, such as projectors, imaging devices, sensors, gyroscopes, batteries, MEMS (micro-electro-mechanical systems), accelerometers and magnetometers, etc. The contact lens must have a sufficient thickness and structural integrity to accommodate the payload. However, increasing the thickness of a contact lens reduces the amount of oxygen that is transmitted through the material of the contact lens to reach the cornea. Often, the payload itself also is not gas permeable, which further reduces the oxygen flow.

As a result, it can be challenging to provide an oxygenation path from the external environment to the cornea, while still meeting the other requirements of the contact lens.

An example of a scleral contact lens with an oxygenation path is disclosed in US 2018/224671 A1. <JI

The invention is defined by the claims of the present patent.

BRIEF DESCRIPTION OF THE DRAWINGS

Embodiments of the disclosure have other advantages and features which will be more readily apparent from the following detailed description and the appended claims, when taken in conjunction with the examples in the accompanying drawings, in which:

FIG. 1A shows a user wearing a display mounted in a scleral contact lens, in accordance with some embodiments.
FIG. 1B shows a cross sectional view of the scleral contact lens display mounted on the user's eye, in accordance with some embodiments.
FIG. 1C is a functional block diagram of an eye-mounted display using a scleral contact lens.
FIG. 2 is a simplified perspective view of a scleral contacts lens able to accommodate a thick payload, where the contact lens is configured to be mounted on the user's eye, in accordance with some embodiments.
Fig. 3A is a more detailed perspective view of a scleral contact lens able to accommodate a thick payload.
Fig. 3B shows a cross-sectional view of the scleral contact lens of Fig. 3A.
Fig. 3C shows an exploded view of components of the scleral contact lens of Fig. 3A.
FIG. 4A shows a side and a top-down view of a patterned structure formed on the outer covering of a scleral contact lens, in accordance with the present invention.
FIG. 4B shows views of a first portion of the patterned structure of FIG. 3A formed on the outer covering of the scleral contact lens.
FIG. 4C shows views of a second portion of the patterned structure of FIG. 3B formed on the outer covering of the scleral contact lens.
FIG. 5A shows a perspective view of an outer covering of a scleral contact lens having a substantially uniform thickness, in accordance with some embodiments.
FIG. 5B shows a perspective view of an outer covering of a scleral contact lens having a patterned structure formed thereon, in accordance with some embodiments
FIG. 6A shows a view of a manufactured core component and outer covering component for a scleral contact lens prior to assembly, in accordance with some embodiments
FIG. 6B shows side and perspective views of the core component and outer covering component of FIG. 6A assembled together.
FIG. 6C shows side and perspective views of the core component and outer covering component of FIG. 6A assembled together and cut down to form the scleral contact lens.
FIGs. 7A(1) and 7A(2) show a side cross-section view of a core component and outer covering component assembled together, where a patterned structure is formed on the core component, in accordance with some embodiments.
FIGs. 7B(1) and 7B(2) show a side cross-section view of the core component and outer covering component of FIGs. 7A(1-2) assembled together and cut down to form the scleral contact lens.
FIG. 8 is a flowchart of a process for forming a scleral contact lens, in accordance with some embodiments.

FIG. 9A shows a simplified perspective view of another type of scleral contacts lens able to accommodate a thick payload, where the contact lens is configured to be mounted on the user's eye, in accordance with some embodiments

FIG. 9B illustrates a more detailed exploded view of the components of the scleral contact lens illustrated in FIG. 9A.

FIG. 9C shows a more detailed cross-sectional view of the scleral contact lens illustrated in FIG. 9A.

FIG. 10A shows a cross-sectional view of a scleral contact lens, in accordance with some embodiments.

FIG. 10B illustrates a more detailed view of region D of FIG. 10A, which includes the first interface between the cap and core, and second interface between the core and base.

FIG. 10C illustrates a more detailed view of region E of FIG. 10A, which includes the central interface connecting the cap to the core of the contact lens.

FIG. 11A shows a cross-sectional view of a three-layer contact lens having another structural interface between the cap, core, and base of a contact lens.

FIG. 11B shows a more detailed view of region A of FIG. 11A, containing the glue interface.

FIG. 12 illustrates a top down view of a contact lens, where the cap is divided into a plurality of separate cap pieces.

FIG. 13 shows an oval scleral contact lens display mounted on a user's eye.

## DETAILED DESCRIPTION OF THE PREFERRED EMBODIMENTS

The figures and the following description relate to preferred embodiments by way of illustration only. It should be noted that from the following discussion, alternative embodiments of the structures and methods disclosed herein will be readily recognized as viable alternatives that may be employed without departing from the principles of what is claimed.

A contact lens may carry a payload for performing various functions. For example, a contact lens may contain a payload of one or more electrical components, such as a projector, an imaging device, one or more sensors, etc. The contact lens must have a sufficient thickness to accommodate the payload. However, increasing the thickness of a contact lens may reduce the amount of oxygen that can be transmitted through the material of the contact lens to reach the cornea.

In order to ensure sufficient corneal oxygenation while maintaining sufficient structural integrity, a scleral contact lens may be constructed in three layers, including an outer covering, a middle structure, and an inner covering. The middle structure may contain a payload(s) and is referred to as the core. The core may comprise a material having mechanical integrity to carry the payload. In some embodiments, the core material has poor oxygen transmissibility.

A portion of the outward-facing (i.e., facing the external environment) surface of the core is covered by the outer covering in areas that are exposed to ambient oxygen. The inner covering covers an inward-facing surface of the core above the user's cornea. When worn by a wearer, the outer covering faces the outside environment, while the inner covering is proximate to the wearer's cornea. The outer covering and inner covering are each a thin layer of gas-permeable material, each shaped to form a respective interstitial cavity (also referred to as "air gaps") between them and the core. The cavities are connected by an air path (e.g., air shafts) that traverses the core. Oxygen from the outside environment passes through the gas-permeable outer covering to reach the outer cavity formed between the outer covering and the core, through the air path to the inner cavity formed between the core and the inner covering, and through the gas-permeable inner covering to reach the cornea of the wearer's eye.

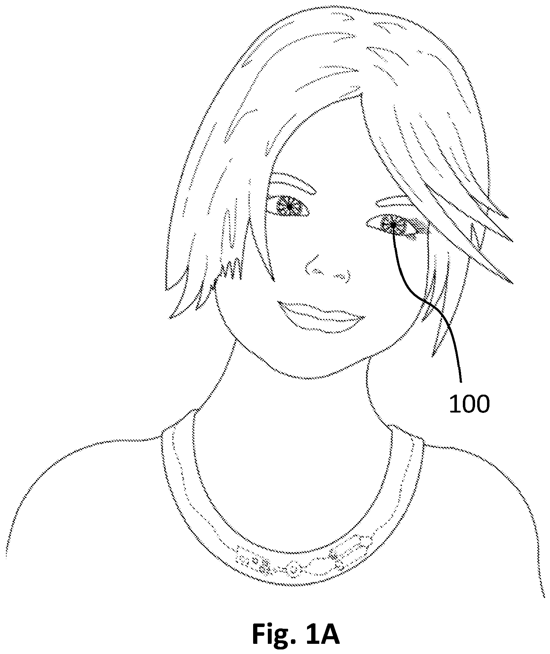

FIG. 1A shows a user wearing a display mounted in a scleral contact lens, in accordance with some embodiments. In some embodiments, the user may wear a scleral contact lens on one eye. In other embodiments, the user may wear a scleral contact lens over each eye. In cases where the user wears a pair of scleral contact lens, each of the scleral contact lenses may contain different payloads, allowing each scleral contact lens to perform different functions. For example, in some embodiments, each scleral contact lens may comprise a projector configured to project images into a respective eye of the user, but also comprise different sensors or other components to provide different types of functionality.

In some embodiments, due to space for processing components on the scleral contact lens being limited, the scleral contact lens 100 is configured to interface with an external device to provide certain functionalities, such as image processing functions, sensor analysis functions, etc. In addition, in some embodiments, the scleral contact lens 100 comprises a power coil configured to receive power wirelessly from an external device. In some embodiments, the external device is an accessory device worn by the user, such as a necklace, headband, glasses, or other wearable device. In other embodiments, the external device is an electronic device such as a mobile phone. In some embodiments, the scleral contact lens 100 may be powered by one or more batteries within the contact lens, and may interface with an external device for performing certain processing functions. In some embodiments, the external device may be configured to communicate with a remote server (e.g., a cloud server).

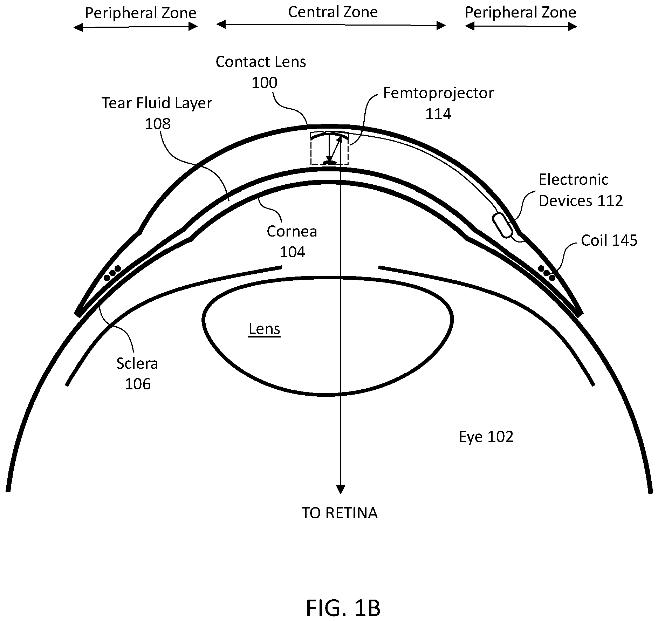

FIG. 1B shows a cross sectional view of the scleral contact lens mounted on the user's eye, in accordance with some embodiments. Scleral contact lenses are designed to be mounted on the sclera of the user's eye such that they do not move around on the wearer's eye when worn. The eye 102 includes a cornea 104 and a sclera 106. The scleral contact lens 100 is supported by the sclera 106 and vaults over the cornea 104, typically forming a tear fluid layer 108 between the contact lens 100 and the cornea. Oxygen permeates through the contact lens 100 and tear fluid layer 108 to the cornea 104, at a rate depending upon the geometry of the contact lens 100 and the oxygen transmissibility and thicknesses of the materials that form the contact lens 100 (not shown in this figure).

The contact lens 100 contains payload(s). These payloads may not be gas-permeable and also may require the contact lens to have a thickness and structural strength sufficient to accommodate and support the payloads. As a result, the approach used in soft contact lenses for corneal oxygenation typically will not be adequate for contact lens 100. In some embodiments, the payload(s) may include electronics, including electronics that require a power source such as a battery or a coil that is inductively powered. In the example of FIG. 1B, the payloads include a small projector that projects images onto the wearer's retina (referred to as a femtoprojector 114), and the corresponding electronics 112 to operate the femtoprojector (e.g., driver circuitry for the femtoprojector). In some embodiments, both of these are powered by a coil 145 around the periphery of the contact lens. In other embodiments, the femtoprojector 114 and electronics 112 may be powered by a battery or other type of power source located within the contact lens 100 (not shown).

The femtoprojector 114 may include an LED frontplane with an LED array, an ASIC backplane with electronics that receives the data to drive the LED frontplane, and optics to project light from the LED array onto the retina. The femtoprojector 114 preferably fits into a 2 mm by 2 mm by 2 mm volume or even into a 1 mm by 1 mm by 1 mm volume. The contact lens 100 must be sufficiently thick and structurally sound to support the femtoprojector 114 and electronics 112, while still maintaining adequate oxygen flow to the cornea.

To allow the femtoprojector 114 to project images onto the user's retina, the femtoprojector 114 may be positioned over the cornea. On the other hand, the electronics 112 may be positioned away from the cornea, as shown in FIG. 1B. For convenience, the contact lens 100 is divided into a central zone and a peripheral zone. The central zone may refer to an area of the contact lens that overlaps the cornea 104 of the eye 102, while the area of the contact lens outside the cornea is referred to as the peripheral zone. As illustrated in FIG. 1B, the femtoprojector 114 is located within the central zone of the contact lens, while the electronics 112 and coil 145 are located in the peripheral zone. People have eyes of different sizes and shapes. The central zone may be defined as a portion of the contact lens that is within a certain distance of a center axis of the contact lens. The diameter of the boundary between the cornea and the sclera is typically between 10 and 12.5 mm, so for convenience, the central zone may be defined as the 10 mm diameter center area of the contact lens (i.e., within 5 mm radius of the center axis of the contact lens). Payload components that project light onto the retina typically will be located within the central zone due to the required optical path. Conversely, payload components that do not project light onto the retina or otherwise interact with the retina may be located on the edge of the central zone or outside the central zone so that they do not block light from reaching the retina.

Other examples of powered payloads include sensors, imagers, and eye tracking components such as accelerometers, gyroscopes and magnetometers. Payloads may also include passive devices, such as a coil or antenna for wireless power or data transmission, capacitors for energy storage, and passive optical structures (e.g., absorbing light baffles, beam-splitters, imaging optics). The contact lens 100 may also contain multiple femtoprojectors, each of which projects images onto the user's retina. Because the contact lens 100 moves with the user's eye 102 as the user's eye rotates in its socket, the femtoprojectors mounted in the contact lens 100 will also move with the user's eye and project to the same region of the retina. Some femtoprojector(s) may always project images to the fovea, and other femtoprojector(s) may always project images to more peripheral regions which have lower resolutions. As a result, different femtoprojectors may have different resolutions. The images from different femtoprojectors may be overlapping, to form a composite image on the wearer's retina. Contact lens having one or more femtoprojectors may hereafter referred to as "contact lens displays" or "eye mounted displays."

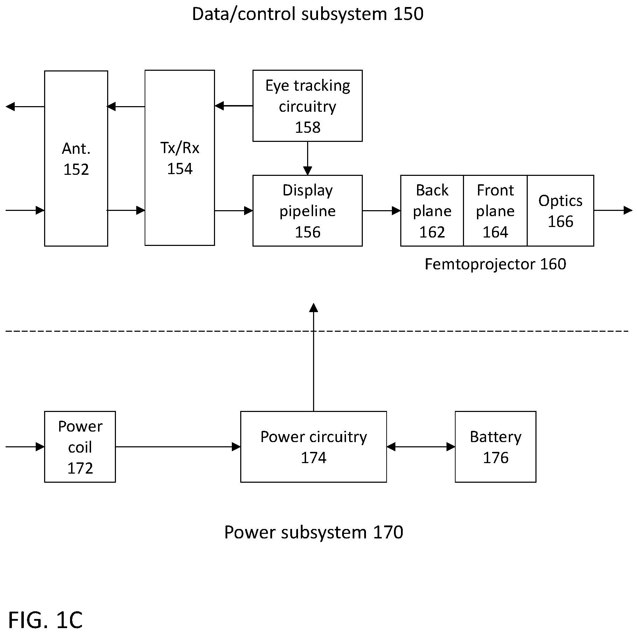

FIG. 1C is a functional block diagram of an eye-mounted display using a scleral contact lens, in accordance with some embodiments. The display can be divided into a data/control subsystem 150 and a power subsystem 170. In some embodiments, the receive path of the data/control subsystem 150 includes an antenna 152, receiver circuitry 154, a data pipeline 156, and a femtoprojector 160. Data from an external source (e.g., an external device such as an accessory device) is wirelessly transmitted to the display via the antenna 152. The receiver circuitry 154 performs the functions for receiving the data, for example demodulation, noise filtering, and amplification. It also converts the received signals to digital form. The pipeline 156 processes the digital signals for the femtoprojector 160. These functions may include decoding, and timing. The processing may also depend on other signals generated internally within the contact lens, for example eye tracking 158 or ambient light sensing. The femtoprojector 160 then projects the corresponding images onto the wearer's retina. In this example, the femtoprojector 160 includes a CMOS ASIC backplane 162, LED frontplane 164 and optics 166, as described previously.

The data/control subsystem 150 may also include a back channel through transmitter circuitry 154 and antenna 152. For example, the contact lens may transmit eye tracking data, control data and/or data about the status of the contact lens.

In some embodiments, power is received wirelessly via a power coil 172. This is coupled to circuitry 174 that conditions and distributes the incoming power (e.g., converting from AC to DC if needed). The power subsystem 170 may also include energy storage devices, such as batteries 176 or capacitors (not shown), in addition to or instead of the power coil 172. For example, in some embodiments, the power coil 172 is used to charge the battery 176, which distributes power to the components of the data/control subsystem 150. In some embodiments, the contact lens may comprise the battery 176 but no power coil 172, or vice versa.

In addition to the components shown in FIG. 1C, the overall system may also include components that are outside the contact lens (i.e., off-lens). For example, head tracking and eye tracking functions may be performed partly or entirely off-lens (e.g., sensor within the contact lens may transmit raw sensor data to an external device, which analyzes the received data to calculate a head or eye orientation). The data pipeline may also be performed partially or entirely off-lens. Each of the arrows on the left-hand side of FIG. 1C also connects to an off-lens component. The power transmitter coil is off-lens, the source of image data and control data for the contact lens display is off-lens, and the receive side of the back channel is off-lens.

There are many ways to implement the different system functions. Some portions of the system may be entirely external to the user, while other portions may be worn by the user in the form of a headpiece or glasses. Components may also be worn on a belt, armband, wrist piece, necklace, or other types of packs. For example, in some embodiments, the contact lens may receive image content to be displayed by the femtoprojector 160 from an external device associated with the user via the antenna 152. The external device may further communicate with a server (e.g., a remote server) to generate the image content.

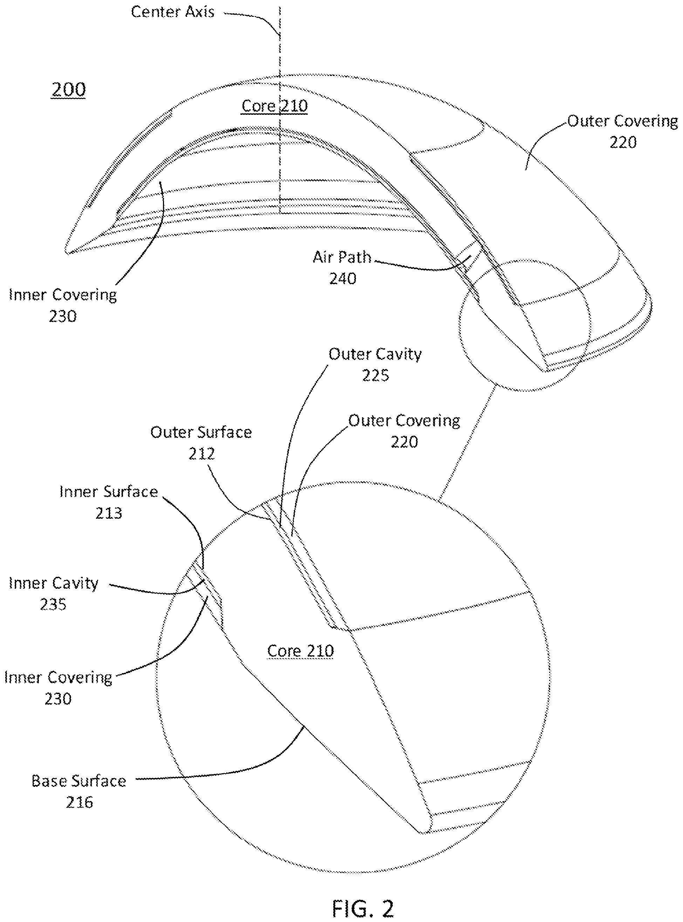

FIG. 2 is a simplified perspective view of a scleral contacts lens able to accommodate a thick payload, where the contact lens is configured to be mounted on the user's eye, in accordance with some embodiments. In some embodiments, a thick payload may refer to a payload greater than 500 um in thickness. With respect to the contact lens, terms such as "outer" "over" "top" and "up" refer to the direction away from the wearer's eye, while "inner" "under" "bottom" and "down" refer to the direction towards the wearer's eye. The scleral contact lens 200 includes a core 210 that carries the payload(s). The core 210 has a base surface 216 that mounts to the sclera of the eye, an outer surface 212 that faces outwards towards the external environment, and an inner surface 213 that faces inwards towards the cornea of the eye. The contact lens 200 also includes an outer covering 220 that covers at least a portion of the outer surface 212 of the core, and an inner covering 230 that covers at least a portion of the inner surface 213 of the core. Each covering 220, 230 forms a corresponding air cavity 225, 235 between the covering and the core 210. An air path 240 through the core 210 connects the two cavities 225, 235. As used herein, the cavities 225 and 235 may also be referred to as an outer air gap 225 and an inner air gap 235, respectively.

Together, the outer covering 220, core 210, and inner covering 230 form a three-layer contact lens 200. The outer covering 220, core 210, and inner covering 230 are shaped such that when the contact lens is assembled, an outer cavity 225 is formed between the outer covering 220 and the core 210, and an inner cavity 235 is formed between the core 210 and the inner covering 230. Because the outer and inner cavities 225 and 235 are each entirely enclosed by their respective structures, the cavities are not directly exposed to the external environment, preventing any debris or other contaminants from the outside air or from the tear layer from potentially reaching either cavity.

The outer covering 220 is exposed to air or separated from air by a thin tear layer that forms over the covering. As such, oxygen diffuses from the surrounding air through the gas permeable material of the outer covering 220 (and thin tear layer) to reach the outer cavity 225. The oxygen in the outer cavity 225 diffuses through an air path 240 to traverse through the thickness of the core 210 to reach the inner cavity 235. From the inner cavity 235, oxygen diffuses through the gas permeable material of the inner covering 230 to reach the tear fluid layer and underlying cornea of the wearer. Because the inner cavity 235 may cover all or most of the wearer's cornea, oxygen may be distributed evenly across the wearer's cornea through the inner covering 230. In some embodiments, one or more surfaces the outer covering and/or the inner covering may be covered with a coating of hydrophilic material, to make the contact lens more comfortable to wear (e.g., by improving lubricity of the contact lens) and/or to preserve gas permeability of the coverings. In some embodiments, portions of the core not covered by the outer and inner coverings (such as the exposed portions of the outer surface of the core) are covered with a coating of hydrophilic material, to increase wearer comfort by improving lubricity.

Oxygen diffusion through the air (such as in the cavities 225, 235 and air path 240) is roughly 100,000 times more rapid than diffusion through permeable solids such as rigid gas permeable ("RGP") plastic. As a result, the oxygen transmissibility of the contact lens 200 is defined primarily by the thicknesses and materials of the two coverings 220, 230, and not by the thickness of the cavities 225, 235, air path 240, or the core 210. The oxygen transmissibility "Dk/t" of the entire contact lens 200 may be approximated based upon the Dk/t of the areas of the outer covering 220 and inner covering 230 overlapping the outer cavity 225 and inner cavity 235, respectively, and not on the thickness or material of the core 210. The thickness and material of the core 210 may be selected to accommodate a desired payload and provide sufficient structural strength to support the payload. Here, Dk is oxygen permeability, where D is a diffusion constant measured in $\left(\frac{cm^2}{sec}\right)$, and k is a concentration of $O_2$ per unit of $O_2$ partial pressure and is measured in $\left(\frac{ml_{O_2}}{ml}\right)\left(\frac{1}{mmHg}\right)$. The t is thickness of the material. Dk/t is often quoted in units of $10^{-11}$ $\left(\frac{cm^2}{sec}\right)\left(\frac{ml_{O_2}}{ml}\right)\left(\frac{1}{mmHg}\right)$. Some sources recommend an oxygen transmissibility of Dk/t = 24 as the minimum for daily wear contact lenses, and an oxygen transmissibility of Dk/t = 87 as the minimum recommended for extended wear lenses in contact with the cornea.

In FIG. 2, the inner covering 230 and inner cavity 235 are large enough to cover substantially all of the cornea. In this way, oxygen can diffuse from the cavity 235 through the inner covering 230 directly to all parts of the cornea. Lateral diffusion through the inner covering 230 or tear layer is generally not required. To accommodate typical corneas, the inner covering 230 and inner cavity 235 each have a circular edge of at least approximately 10-13 mm in diameter.

For the outer covering 220 and outer cavity 225, the location is less important than the overall surface area exposed to ambient oxygen. In some designs, the outer structure 220, 225 has a same surface area as the inner structure 230, 235. That is, in FIG. 2, the overlap area between the outer covering 220 and outer cavity 225 is at least equal to the overlap area between the inner covering 230 and inner cavity 235.

The air path 240 in FIG. 2 is a single air shaft through a solid section of the core 210, for example a 1 mm diameter air shaft. Because oxygen diffusion in air is high, the specific shape and location of the air path 240 is secondary in importance, so long as it connects the two cavities 225, 235. For example, the air path may be implemented as two or more air shafts instead of one air shaft. It may also be located in a periphery of the contact lens, for example outside a 10 mm diameter central zone, so that it does not interfere with light entering the eye.

The coverings 220, 230 are each relatively thin in comparison to the core 210 and are made of materials that are permeable to oxygen such as rigid gas permeable ("RGP") plastic. On the other hand, the core 210 is sufficiently thick to accommodate the payloads, such as femtoprojectors and electronic components. The core 210 may also be made from an oxygen permeable material such as RGP, or from an oxygen impermeable material such as poly(methyl methacrylate) ("PMMA"). The approach described above may also be used when the core 210 does not contain a payload, but is so thick that it would have insufficient oxygen transmission. In some embodiments, the outer covering 220, core 210, and inner covering 230 are bonded to each other via an adhesive. Suitable adhesives may include glues such as medical grade optical cement. Example glues that may be appropriate for this application include UV-curable optical adhesives from Henkel Loctite.

In some embodiments, such as in the design shown in FIG. 2, the core 210 makes contact with the sclera through the base surface 216, while the inner covering 230 does not contact the sclera. This provides additional space in the core to accommodate payloads, compared to designs in which the core does not extend all the way to the sclera. This approach may also provide more payload space located close to the perimeter of the contact lens. For example, a coil may be located closer to the perimeter, resulting in a larger area coil and more efficient power transfer. The core 210 material is also a good structural material to support the payloads. In some embodiments, the both core 210 and inner covering 230 may contact the sclera.

In some embodiments, the outer covering 220 has an annular shape and does not cover a center area of the contact lens. For example, the outer covering 220 may have a center hole have a diameter of at least 5mm, at least 8mm, or at least 10mm. Because the outer covering 220 does not extend to the center of the core 210, the outer covering 220 does not contribute to the total thickness at the center of the contact lens 200. As a result, the contact lens 200 has a reduced thickness in comparison to a contact lens having an outer covering that also covers the center of the core (e.g., a dome-shaped outer covering). In addition, if the center hole of the outer covering 220 is large enough (e.g., 8 mm diameter or larger), a number of boundaries between different materials that light may need to pass through en route to the wearer's eye in comparison to if the outer covering was formed to cover the central zone is reduced. As such, by configuring the shape of the outer covering such that it does not interfere with light passing through the contact lens to reach the wearer's eye, potential optical reflection or scattering that may occur at the boundaries between the outer covering 220, the outer cavity 225, and the core 210 is eliminated. Furthermore, an annular outer covering 220 may be more durable and more easily supported by the core 210 in comparison to one that must be supported over the entire center area of the contact lens. Thus, the outer covering 220 can be made thinner while still maintaining structural integrity, which increases the oxygen transmission through the outer covering.

In addition, in some embodiments, the coverings 220, 230 are flush with the core 210. The outer surface 212 of the core has a recess for the outer covering 220, so that the outer covering and the core's adjoining outer surface 212 form a smooth surface. Because the eyelid blinks over the contact lens, a smooth outer surface is more comfortable, as well as providing an overall thinner contact lens as described above. The inner surface 213 of the core also has a recess for the inner covering 230, also resulting in a smooth surface between the two.

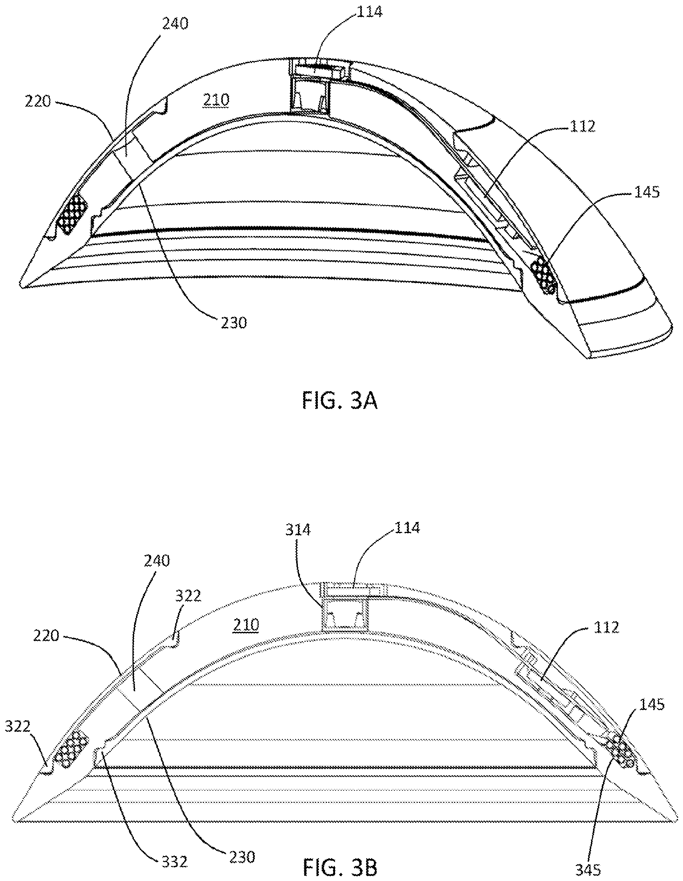

FIGs. 3A-3C are a more detailed perspective view, cross-sectional view and exploded view of the scleral contact lens shown in FIG. 2. As shown in FIGs. 3A-3C, the outer covering 220, core 210, and inner covering 230 are overlaid on top of each other to form the contact lens 200, and may be aligned and secured using one or more registration features. These registration features 322 and 332 are marked on the left side of FIG. 3B. The structures may also contain support features such as ridges or protrusions, or spacers such as plastic micro balls, cylindrical or rectangular posts, etc., to prevent the air gaps from collapsing and to maintain the overall structural integrity of the contact lens (not shown).

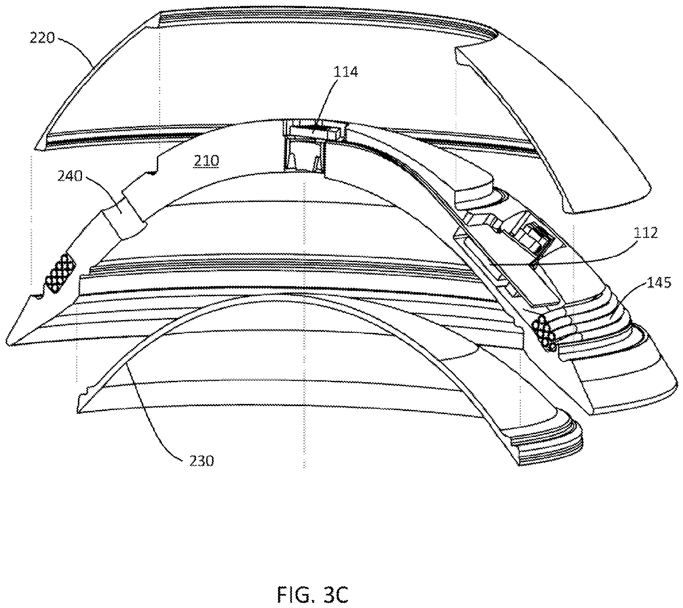

In addition to the structures shown in FIG. 2 for oxygen transmission, FIG. 3 also shows the femtoprojector 114 and electronics 112 (and interconnect between them) and coil 145 from FIG. 1. The core 210 includes features to accommodate these payloads. For example, the core 210 has a through-hole 314 within the central zone of the core to accommodate the femtoprojector 114. The femtoprojector 114 is placed within the through-hole 314 and secured using an encapsulating material, which functions both to fix the position of the femtoprojector and to protect the femtoprojector from the outside environment.

As another example, the core 210 also includes a groove 345 formed around the circumference of the core 210. The power coil 145 is wound inside this groove 345. Note that in the embodiment illustrated in FIG. 3, the groove 345 is not separated from the outer air gap 225, which may allow components to be located close to the perimeter of the contact lens. In some cases, the component (e.g., coils 145) may be encapsulated in an adhesive or other material so that the components are not exposed to the air within the outer air gap 225. Other features may be used to accommodate other payloads, such as the electronics 112 or interconnects.

In FIG. 3, the air path is a single air shaft 240. It is formed within the core 210 and traverses the thickness of the core 210 to connect the outer air gap 225 to the inner air gap 235. The air shaft 240 is formed in the peripheral zone of the core 210. It may be oriented to be substantially perpendicular to the outer and inner surfaces of the core 210, and connects laterally overlapping portions of the outer air gap 225 and inner air gap 235. In some embodiments, multiple air shafts 240 may traverse the core 210 to connect the outer and inner air gaps 225 and 235.

In some embodiments, the components of the contact lens (the outer covering 220, core 210, and inner covering 230) are manufactured separately and assembled together at a later time. For example, the outer covering 220, core 210, and inner covering 230 may each be a prefabricated component. Different variations of each component may be fabricated to create different possible combinations. In some embodiments, the inner covering 230 may be customized to provide a desired amount of refractive correction (e.g., customized for a specific wearer, or one or a plurality of predetermined refractive correction amounts, etc.). For example, the thickness and inner surface of the inner covering 230 may be adjusted to achieve different amounts of refractive correction. On the other hand, the outer covering 220 and the core 210 may be manufactured as standard components. The outer surface of the inner covering 230 may have a predetermined common shape, allowing for the outer covering 220 and core 210 to be placed on different inner coverings 230 having different amounts of refractive correction. In other embodiments, different variations of the outer covering 220 and core 210 may be manufactured and assembled with the remaining components. In some embodiments, the shapes of the components may be modified by precision machining on a diamond lathe.

The structure and material of the coverings influences the amount of oxygen that is able to flow from the outside environment to the user's cornea. The flow of oxygen may be increased by decreasing the thickness of the coverings. However, thinner coverings do not have the structural integrity to span long distances without support. In some embodiments, to facilitate oxygen flow, at least one of the inner covering, the outer covering, and the core is formed to have a patterned structure of varying thicknesses, such as a pattern of recesses interspersed with supports. The patterned structure may be formed on an inner surface of the outer covering, on an outer surface of the inner covering, on a portion of the outer surface of the core facing the outer covering, or on a portion of the inner surface of the core facing the inner covering. The core and covering contact each other at the supports, and the recesses form the cavity for oxygen flow. Because each recess spans only a short distance between supports, the covering may be made thinner, thus increasing oxygen transmission.

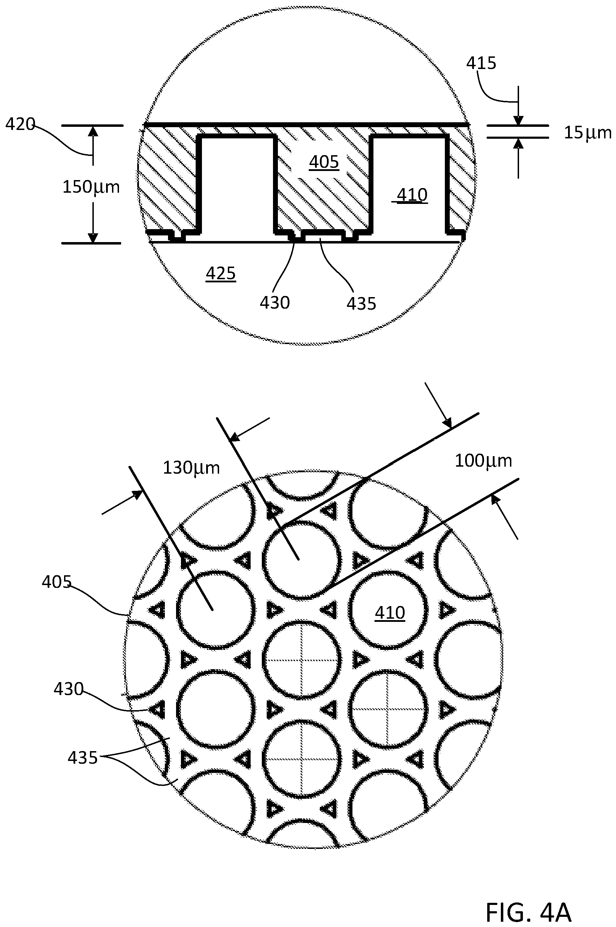

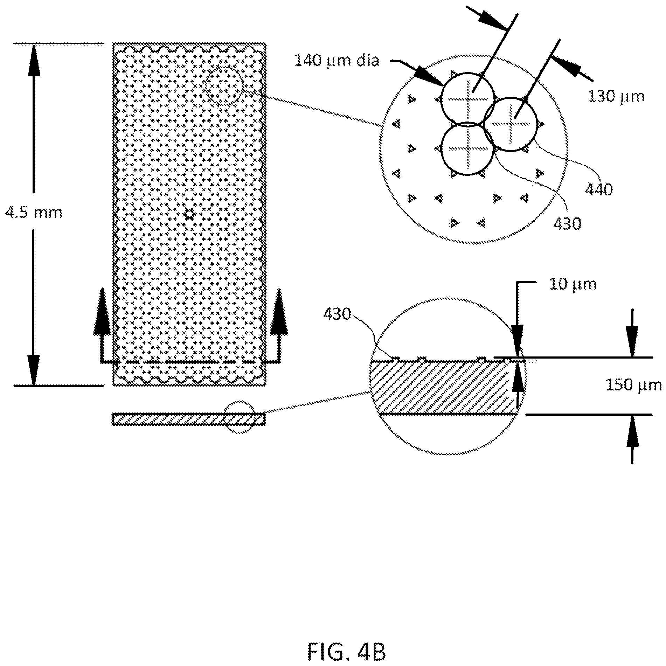

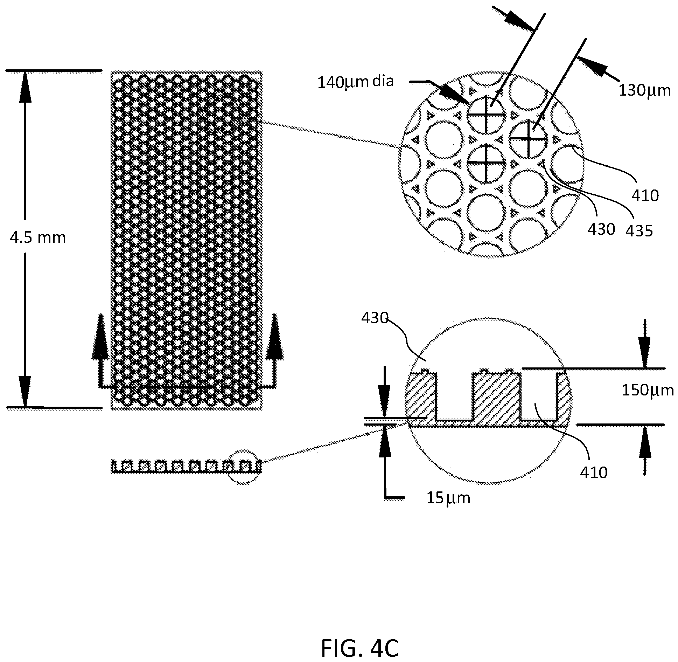

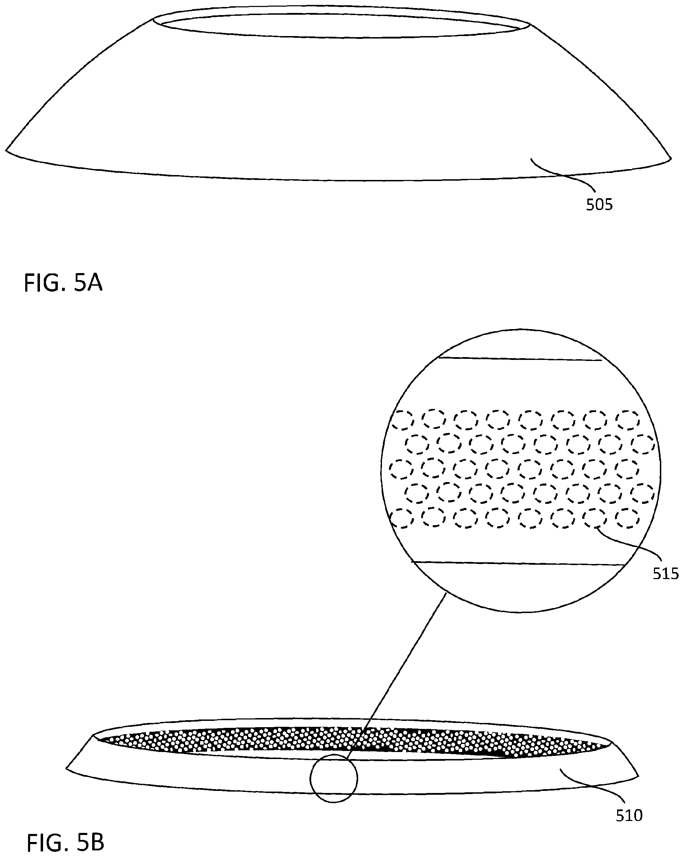

For ease of discussion, FIGs. 4 and 5 below show the patterned structure as being formed on the inner surface of the outer covering. In such an arrangement, the core and outer covering contact each other at the supports of the patterned structure, while the recesses of the patterned structure form the cavity between the core and outer covering, allowing for oxygen flow from the external environment to pass through the outer covering to the cavity. Because each recess spans only a short distance between supports, the outer covering may be made thinner without compromising structural integrity.

According to the present invention, the patterned structure comprises a pattern of blind holes. FIG. 4A shows a side and a top-down view of a patterned structure formed on the outer covering of a scleral contact lens, in accordance with some embodiments. As illustrated in FIG. 4A, a pattern of blind holes 410 are formed on an inner surface of the outer covering 405 of the scleral contact lens. In this example, the maximum thickness 420 of the outer covering 405 is 150um (microns). Each of the blind holes 410 creates a recess within the outer covering 405 where the outer covering has a reduced thickness 415 (15um in this example). In some embodiments, the reduced thickness 415 of the outer covering corresponding to the recesses defined by the blind holes 410 is significantly smaller than the maximum thickness 420 of the outer covering (e.g., ~10% of the maximum thickness). For example, in some embodiments, the outer covering (prior to forming of the patterned structure) may have a thickness of approximately 150um, while the thickness of the outer covering within the recesses may be approximately 15um. It is understood that any specific dimensions discussed herein are used solely for purpose of example, and that patterned structures and contact lens components may have dimensions other than those discussed herein.

The patterned structure is formed such that when the outer covering 405 is placed over the core 425, portions of the outer covering 405 between each of the blind holes 410 will contact the outer surface of the core 425. As such, each portion of reduced thickness of the outer covering 405 (defined by the blind holes 410) spans only a short distance over the core 425. This allows for the thickness of outer covering 405 within the recesses to be reduced, while still maintaining structural integrity.

According to the invention, one or more pillars 430 are formed on the portions of the outer covering 405 between the blind holes 410. When the outer covering 405 is placed over the core 425, the pillars 430 function to support the outer covering 405 on the core 425, as well as space a portion of outer covering 405 between the blind holes 410 away from the core 425. This space between the pillars 430 defines the air cavity 435 (also referred to as channels or passages 435) connecting adjacent blind holes 410 and allowing air to flow between them. The blind holes 410 and their connecting channels 435 thus collectively form a single cavity between the outer covering 405 and the core 425, allowing oxygen passing through the outer covering 405 at the location of any of the blind holes 410 to reach an air passage(s) within the core (e.g., air path 240) and the inner cavity.

In some embodiments, the blind holes 410 are formed in a hexagonal pattern, where each of the blind holes 410 is surrounded by six adjacent blind holes. In addition, as illustrated in FIG. 3A, each pillar 430 may be located between three adjacent blind holes 410. In other embodiments, the blind holes 410 may be formed in a rectangular pattern or other type of pattern. In some embodiments, the blind hole pattern of the patterned structure is configured such that a distance between pillars 430 in the patterned structure does not exceed 1 mm.

According to the invention, the blind hole pattern illustrated in FIG. 4A is formed using a plurality of overlaid blind hole patterns, e.g., a first blind hole pattern comprising blind holes of a first radius and a first depth, and a second blind hole pattern comprising blind holes of a second radius and a second depth. In some embodiments, the first and second blind hole patterns are aligned, such that the blind holes of the first and second blind hole patterns share central axes. As such, the spacing of the blind holes of the first blind hole pattern is the same as the spacing of the blind holes of the second blind hole pattern.

Examples of the use of first and second overlaid blind hole patterns to create the overall pattern are discussed in relation to FIGs. 4B and 4C below. FIG. 4B shows views of a first step in forming the patterned structure of FIG. 4A. In this first step, large overlapping blind holes 440 of shallow depth are cut into the outer covering, thus creating the pillars 430. The depth corresponds to a desired height of the pillars 430. Because oxygen diffusion through the air (e.g., within the channels 435 formed between the pillars 430) is roughly 100,000 times more rapid than diffusion through permeable solids (such as that used to form the outer covering 405), the height of each pillar 430 (and the height of the resulting channels 435 formed between them) may be small compared to the total thickness of the outer covering 405 (e.g., between 5-10% of the thickness of the outer covering). This allows for the pillars 430 to more stably support the outer covering 405 on the core 425, while the channels 435 will still provide sufficient air flow between the blind holes 410.

The radius of these blind holes is selected to be greater than the spacing between the blind holes, such that the blind holes 440 will partially overlap when formed on the outer covering 405. However, the radius is selected such that material is left between adjacent blind holes to form the pillars 430. For example, in a hexagonal blind hole pattern, such as that illustrated in FIG. 4B, each pillar 430 is defined by the material left between three adjacent blind holes 440. Consequently, each blind hole 440 forms six pillars corresponding to the material left between it and its six adjacent blind holes. In this example, the blind holes cover a 4.5mm wide swath of the outer covering.

FIG. 4C shows views of a second step in forming the patterned structure of FIG. 4A. Here, a second blind hole 410 pattern is formed on the outer covering 405 after the formation of the first blind hole pattern of FIG. 4B. While the first blind hole pattern defines the pillars 430, the second blind hole pattern defines the recesses of the outer covering 405. In some embodiments, each of the blind holes of the second blind hole pattern is aligned with a central axis of a corresponding blind hole 440 of the first blind hole pattern (e.g., such that the blindhole 310 is centered between a set of pillars 430 formed by the first blind hole pattern). The depth of these blind holes 410 is selected based upon desired reduced thickness 415 of the outer covering within the recessed regions of the patterned structure.

Consequently, after both the first and second blind hole patterns have been formed on the outer covering 405, the surface of the outer covering 405 will comprise a plurality of recesses (e.g., defined by the blind holes 410 of the second blind hole patterns) where the thickness of the outer covering is greatly reduced, positioned between supports having pillars 430 where the outer covering 405 is supported by the core 425. Because the rate at which air (including oxygen) is able to pass through the outer covering is inversely proportional to the thickness of the outer covering, oxygen transmission through the outer covering 405 at the recesses is greatly increased due to the reduced thickness 415 of the outer covering. Oxygen may pass between different blind holes 410 via the channels 435 formed by spaces between the pillars 430, connecting the blind holes 410 of the patterned structure to collectively form a single cavity between the outer covering and core of the contact lens. Oxygen can thus pass through the gas permeable material of the outer covering from the external environment to the recesses defined by the blind holes, and flow between the blind holes to reach an air passage through the core (e.g., the air path 240 illustrated in FIG. 2) to the inner cavity, where it may then pass through the inner covering to oxygenate the user's cornea.

Although FIGs. 4B and 4C illustrate the second blind hole pattern formed after the first blind hole pattern, it is understood that in other embodiments, the first and second blind hole patterns may be formed in a different order.

In addition, although FIGs. 4A-4C illustrate the blind holes of the patterned structure as cylindrical blind holes, it is understood that in some embodiments, the patterned structure may comprise a blind hole pattern in which the blind holes are of a different shape. For example, in some embodiments, the patterned structure comprises a blind hole pattern in which each blind hole is shaped as a frustum, in which a size of the blind hole decreases with depth within the outer covering, i.e., from a first, larger size at the surface of the outer covering on which the blind hole is formed, to a second, smaller size at the maximum depth of the blind hole. In some embodiments, the first and second sizes are selected such that the blind holes will partially overlap up to a certain depth. Material left in non-overlapping regions between adjacent blind holes function as pillars to support the outer covering on the core, while gaps formed by areas of overlap between adjacent blind holes form passages allowing for air flow between the blind holes of the pattern.

Because the patterned structure allows for portions of the outer covering to be greatly reduced in thickness (e.g., ~10% compared to an original thickness of the outer covering), an overall surface area of the outer covering required to achieve a desired level of oxygen transmission may be reduced, due to oxygen transmissibility being directly proportional to surface area and inversely proportional to thickness of the outer covering.

FIG. 5A shows a perspective view of an outer covering of a scleral contact lens having a substantially uniform thickness, in accordance with some embodiments. The outer covering 505, when mounted on the core of a contact lens, may contact the core only at the edges of the outer covering, and define an outer cavity between an inner surface thereof and an outer surface of the core having a substantially uniform thickness. To maintain a desired level of structural integrity, the outer covering may need to have at least a minimum thickness. In addition, to achieve a desired level of oxygen transmission, the outer covering 505 may need to have at least a particular surface area for a given thickness. For example, in some embodiments, the outer covering may have a thickness of 150um and cover a surface area of 140mm² on the core to achieve a desired oxygenation level.

FIG. 5B shows a perspective view of an outer covering of a scleral contact lens having a patterned structure formed thereon, in accordance with some embodiments. The patterned structure 515 formed on the outer covering 510 may comprise the overlaid blind hole pattern such as that illustrated in FIGs. 4A-4C (e.g., first and second overlaid blind hole patterns forming a plurality of blind holes and pillars between adjacent blind holes). The patterned structure 515 of the outer covering 510 creates intermittent points of support (e.g., at the pillars 430 illustrated in FIGs. 4A-4C) between the outer covering 510 and the core when outer covering 510 is assembled on the core. Because the recessed regions of patterned structure 515 formed in the outer covering 510 have reduced thickness, the amount of oxygen transmission of the outer covering 510 for a given surface area may be increased. As an example, if the recesses of the patterned structure cover 50% of the outer covering and are 80% thinner than the thickness of the outer covering 505 of FIG. 5A, then an amount of oxygen transmission for a given surface area may be increased by at least

$$\frac{50\%}{(1-80\%)} - 1 =$$

150%. As such, a total surface area of the core that is covered by the outer covering may be reduced. For example, the outer covering 510 illustrated in FIG. 5B (having a patterned structure 515 formed thereon) may have a reduced surface area in comparison to the outer covering 505 illustrated in FIG. 5A (having substantially uniform thickness), but may still be able to provide a similar amount of oxygen transmission to the outer cavity of the contact lens. In some embodiments, the outer covering 510 has an annular shape with a width of 3mm or less. If the patterned structure increases the oxygen transmission by 150% (i.e., 2.5x the oxygen transmission in FIG. 5A), then the surface area can be 40% of the surface area in FIG. 5A and still maintain the same oxygen transmission. In some embodiments, the patterned structure is configured such that the recesses of the patterned structure occupy at least a threshold percentage (e.g., >50%) of an overall area of the patterned structure, to ensure that the benefit to oxygen transmissibility from having a reduced thickness of the outer covering at the recesses offsets the reduction in transmissible surface area due to contact between the inner covering and core at the supports. In some embodiments, the outer covering may be configured to have, within the area of the patterned structure, an average thickness of less than 100um, and cover an area on the contact lens of not more than 100mm². In some embodiments, the patterned structure is configured to cover at least a threshold amount of the outer covering (e.g., at least 1/3 of an overall area of the outer covering). In some embodiments, an overall area of the annular outer covering on the core may be not more than 100mm². Reducing a surface area of the core covered by the outer covering may allow for additional flexibility regarding placement of various components and payloads on the core (e.g., outer covering, payload components such as electronic components, power coils, etc.).

While the above discussion refers primarily to embodiments where the patterned structure comprises a pattern of blind holes, it is understood that the patterned structure may comprise any type of structure that defines a plurality of recesses interspersed between a plurality of supports. For example, in some embodiments, the patterned structure may comprise a plurality of grooves formed on the inner surface of the outer covering. Regions of the outer covering between the formed grooves define ridges that support the outer covering when placed on the core, while the grooves define recesses where the outer covering is of reduced thickness, facilitating oxygen transmission from the outside environment into the grooves. In some embodiments, the plurality of grooves are connected to each other by one or more passages, allowing for air flow between the grooves. For example, in embodiments where the outer covering is annular in form (e.g., as illustrated in FIGs. 2-3 and 5), the patterned structure may comprise a plurality of concentric circumferential grooves formed on the outer covering, with one or more additional grooves oriented orthogonally to the circumferential grooves to form passages connecting the circumferential grooves.

In some embodiments, the patterned structure is formed on an outer surface of the core instead of an inner surface of the outer covering. For example, the patterned structure may comprise a plurality of concentric circumferential grooves formed on an outer surface of the core, whereas the outer covering may be of substantially uniform thickness. When mounted on the core, the ridges between pairs of adjacent grooves on the core directly contact an inner surface of the outer covering, functioning as supports for the outer covering, while the space between the inner surface of the outer covering and the grooves with the core form the outer cavity. In some embodiments, the outer covering is formed to be of substantially uniform thickness. However, due to being periodically supported by the patterned structure formed on core, the thickness of the outer covering may be reduced compared to an outer covering that is supported only at its edges.

In some embodiments, forming the patterned structure on the outer surface of the core instead of on an inner surface of the outer covering may improve oxygen transmissibility. Because the outer covering can be formed to be of a reduced uniform thickness, as the supports which would correspond to areas of increased thickness of the outer covering are formed on the core instead of on the outer covering, the impact of the supports on oxygen transmissibility is reduced. In addition, in some embodiments, the supports of the patterned structure formed on core may be rounded, pointed, or otherwise shaped to reduce a contact area with the outer covering, increasing an amount of surface area of the outer covering that contributes to oxygen transmission. In some embodiments, the outer covering over the patterned structure formed on the core may have an average thickness of not more than 100um.

Due to the outer covering contacting the core at the supports of the patterned structure when the outer covering is mounted to the core, the portions of the outer covering having reduced thickness (e.g., recesses) will only span a short distance (e.g., corresponding to a distance between supports). However, prior to the outer covering being assembled on the core, these portions of reduced thickness may cause the outer covering to be difficult to handle, due to lack of support from the core leading to potential folding or breakage of the outer covering.

In some embodiments, instead of forming the core and outer covering to their final desired thicknesses, the outer covering and/or the core are initially formed as an outer covering component and/or core component having a larger thickness, which is then cut down to the desired thickness after assembled together. This may help to ensure that the outer covering is thick enough to handle prior to being mounted on (and thus receiving support from) the core.

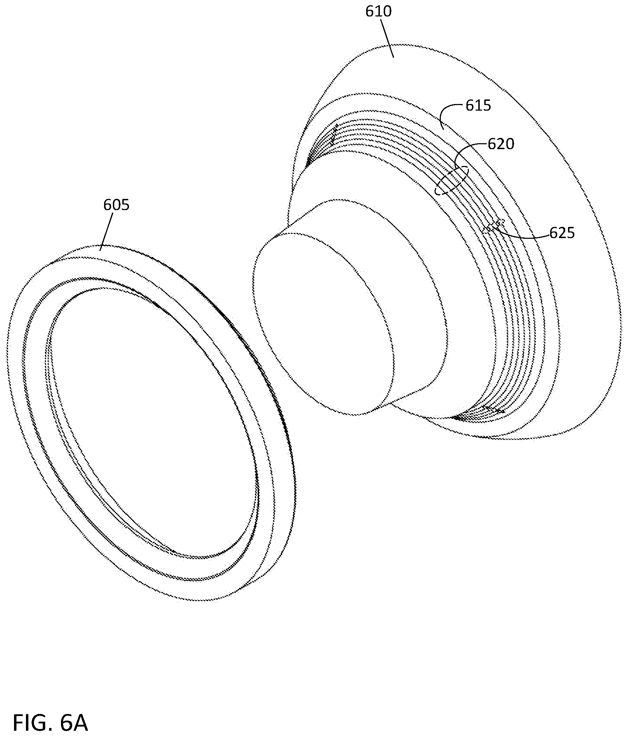

FIG. 6A shows an exploded view of a manufactured core component and outer covering component for a scleral contact lens prior to assembly, in accordance with some embodiments. The outer covering component 605 is formed from an oxygen permeable material, and has a thickness that facilitates handling of the outer covering component 605. In addition, the core component 610 may also be formed to be thicker than its final desired form. For example, in some embodiments, the core component 610 may include one or more alignment features or edges 615 that serve to align the outer covering component 605 when placed over the core component 610, to ensure that the outer covering component 605 is positioned correctly relative to the core component 610. The core component 610 may further comprise one or more features to facilitate handling of the core component 610.

A patterned structure comprising a plurality of recesses interspersed between a plurality of supports is formed on either the outer covering component 605 or the core component 610. For example, as illustrated in FIG.

6A, the patterned structure may correspond to a plurality of circumferential grooves 620 formed on a portion of the core component 610. In addition, an additional groove 625 may be formed as part of the patterned structure to function as a passage between the grooves of the circumferential grooves 620.

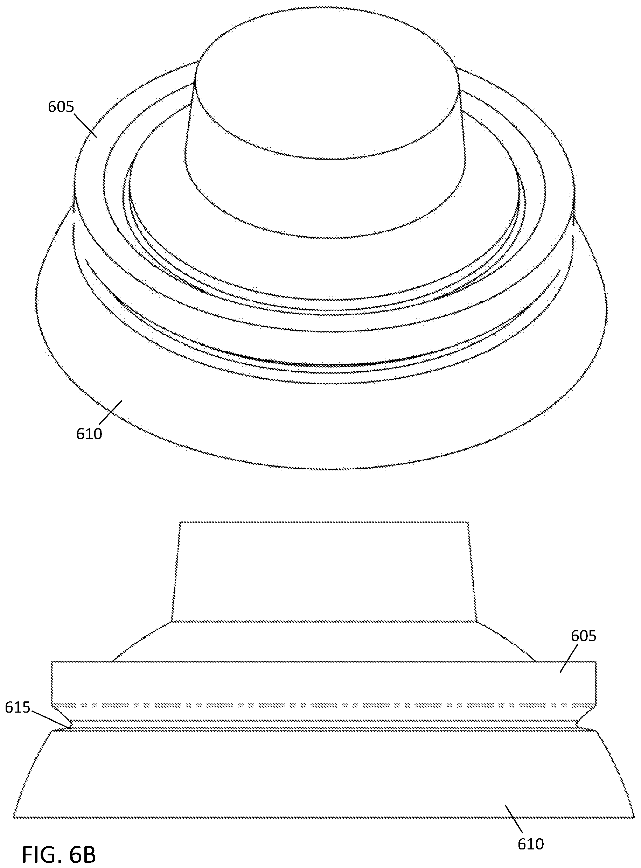

FIG. 6B shows side and perspective views of the core component and outer covering component of FIG. 6A assembled together. As illustrated in FIG. 6B, the outer covering component 605 is placed over the core component 610. The outer covering component 605 may be aligned to the core component 610 using one or more registration features 615. When the outer covering component 605 is placed over the core component 610, an inner surface of the outer covering component 605 and an outer surface of the core component directly contact at the supports of the patterned structure (not shown), e.g., ridges of the patterned structure formed between the circumferential grooves 620. In some embodiments, the outer covering component 605 and core component 610 are fixed to each other using one or more glue layers (not shown).

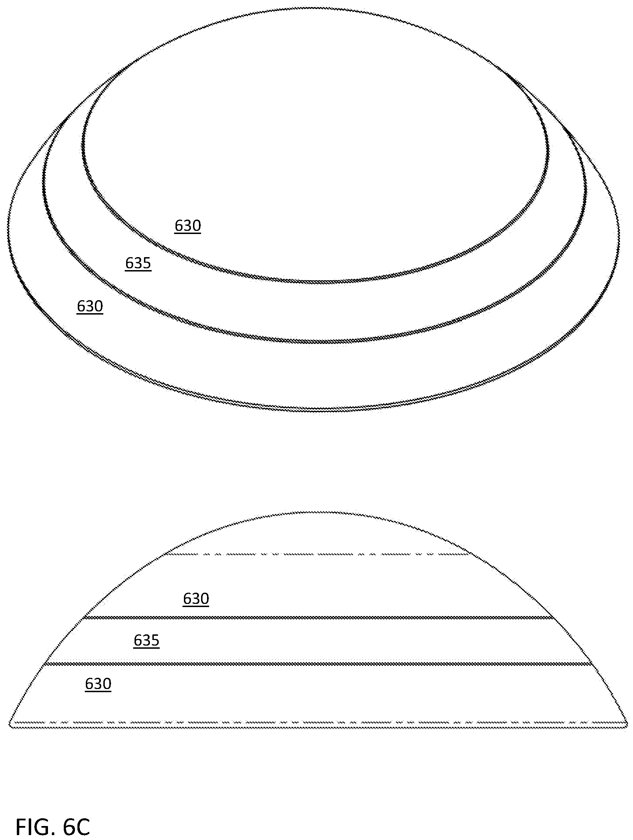

FIG. 6C shows side and perspective views of the assembled core component and outer covering component of FIG. 6B cut down to form the scleral contact lens. After the outer covering component 605 has been mounted on the core component 610, an outer surface of the outer covering component 605 and the core component 610 are shaped to their desired form. In some embodiments, excess material of the outer covering component 605 and core component 610 is cut away using a lathe, to form the core 630 and outer covering 635 of the contact lens. The core 630 and outer covering 635 are shaped such that the outer surface of the outer covering aligns with an outer surface of the core, creating a smooth outer surface for the contact lens. In addition, because the outer covering 635 is supported by the core 630 (e.g., via supports of the patterned structure), the outer covering 635 can be shaped to a reduced thickness to facilitate oxygen transmission from the local environment to the outer cavity formed by the recesses of the patterned structure between the outer covering and the core.

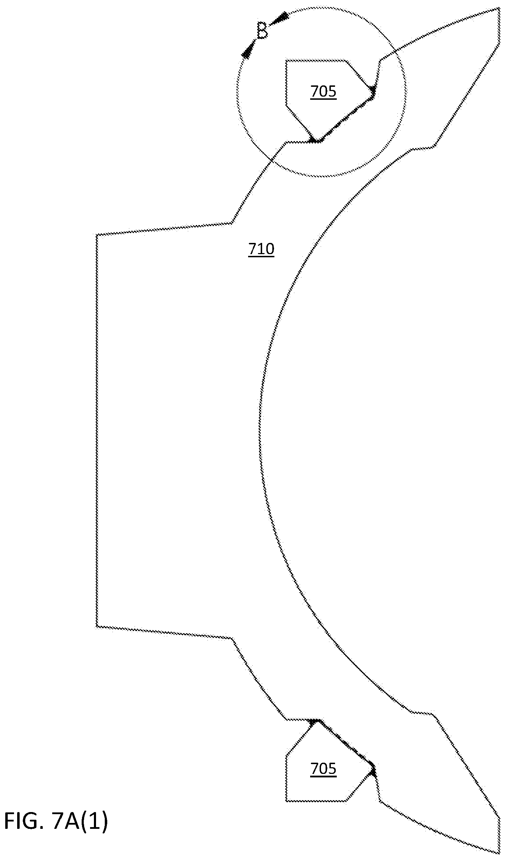

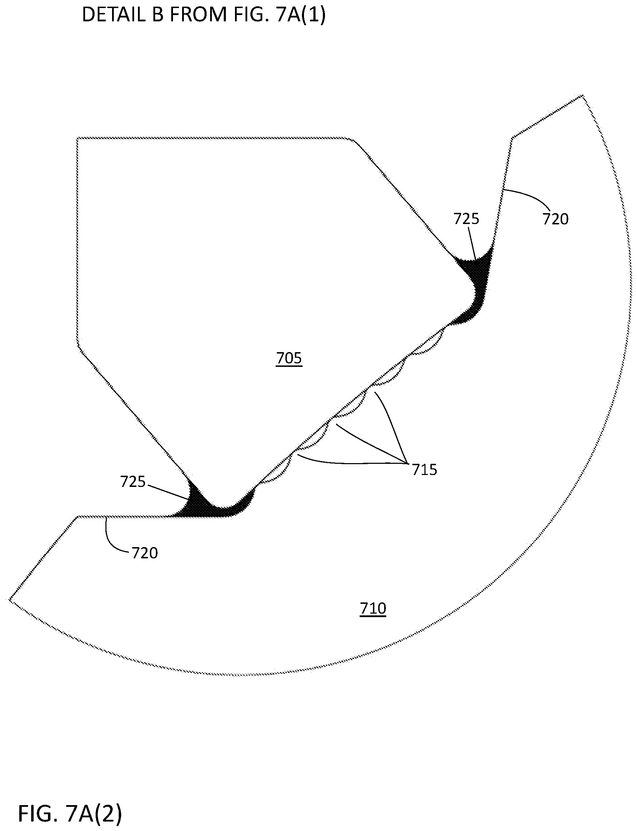

FIG. 7A shows a side cross-section view of a core component and outer covering component assembled together, where a patterned structure is formed on the core component, in accordance with some embodiments. FIG. 7A(1) shows a zoomed out cross-section of the core component and outer covering component, while FIG. 7A(2) shows a close-up view of the interface between the core component and outer covering component zoomed in at area B shown in FIG. 7A(1). The core component 710 and outer covering component 705 illustrated in FIG. 7A may correspond to the core component 610 and outer covering component 605 illustrated in FIGs. 6A and 6B. As illustrated in FIG. 7A, the outer covering component 705 is placed against the core component 710 such that an inner surface of the outer covering component 705 directly contacts the supports of a patterned structured 715 formed on a portion of an outer surface of the core component 710. In other embodiments (not shown), the patterned structure is formed on the outer covering component 705, which is aligned such that the supports of the patterned structure contact the outer surface of the core component 710.

The outer covering component and core component may contain extra material relative to their final desired forms, to facilitate handling and/or alignment during assembly. For example, the outer covering component 705 may be formed from a thick material, allowing for it be more easily handled and with less risk of deformation or breakage during assembly. In addition, the core component 710 may comprise alignment features 720 that facilitate alignment between the outer covering component 705 and the core component 710.

In some embodiments, the outer covering component 705 and the core component 710 are fixed to each other via a glue layer 725 deposited at an edge between the outer covering component 705 and the core component 710. In some embodiments, the glue layer 725 may fill a space between the outer covering component 705 and the core component 710 extending to an outer support of the patterned structure 715. However, the outer support of the patterned structure, due to creating direct contact between the core component 710 and outer covering component 705, prevents the glue 725 from reaching the recesses within the patterned structure 715. The glue 725 may function to seal the recesses of the patterned structure 715 away from the outside environment. Consequently, air can only reach the cavity formed between the outer covering component 705 and core component 710 defined by the recesses through the gas permeable material of the outer covering component 705, thus preventing outside debris and contaminants from entering the outer cavity.

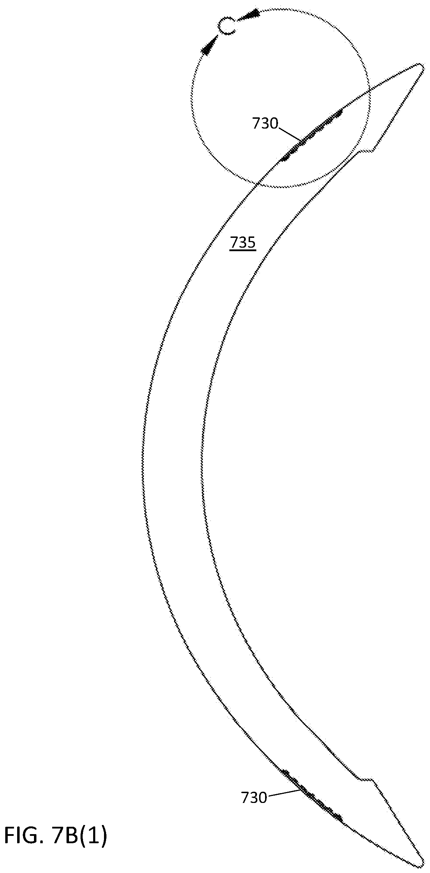

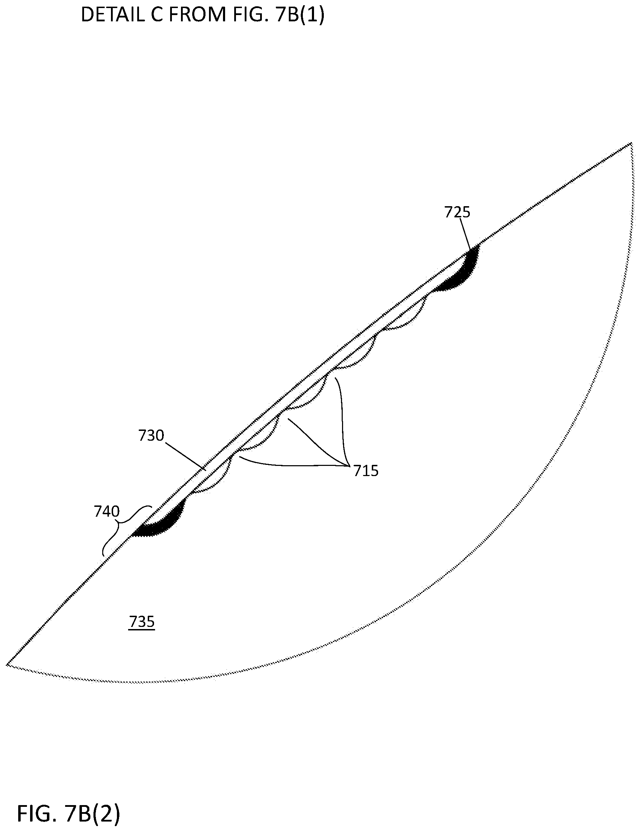

FIG. 7B shows a side cross-section view of the core component and outer covering component of FIG. 7A assembled together and cut down to form the scleral contact lens. FIG. 7B(1) shows a zoomed out cross-section, while FIG. 7B(2) shows a close-up view of the interface between the core component and outer covering component zoomed in at area C shown in FIG. 7B(1). As illustrated in FIG. 7B, the assembled outer covering component and core component are cut down to form a core 735 and outer covering 730 having a smooth outer surface 740. The outer covering 730 is shaped to a thickness that allows for a desired amount of oxygen transmission through the outer covering to reach the outer cavity of the contact lens. Because the patterned structure 715 is formed on the core 735 in the embodiment illustrated in FIG. 7B, the outer covering 730 may be shaped to be of substantially uniform thickness. The outer covering 730 is periodically supported by the supports of the patterned structure 715, allowing for the thickness of the outer covering 730 to be reduced relative to if the outer covering did not contact the core between the glue layers 725. For example, in some embodiments, the supports of the patterned structure may be spaced such that the outer covering over the area of the patterned structure does not span a distance of more than 0.5mm. As such, even though the contact points between the outer covering 730 and the supports of the patterned structure formed on the core 735 may potentially decrease an area of the outer covering 730 through which oxygen can be transmitted, the reduction in thickness that is possible for the outer covering 730 may allow for the overall oxygen transmissibility of the outer covering to increase. In some embodiments, the supports of the patterned structure may be rounded or pointed, to reduce an area of the supports in direct contact with the outer covering.

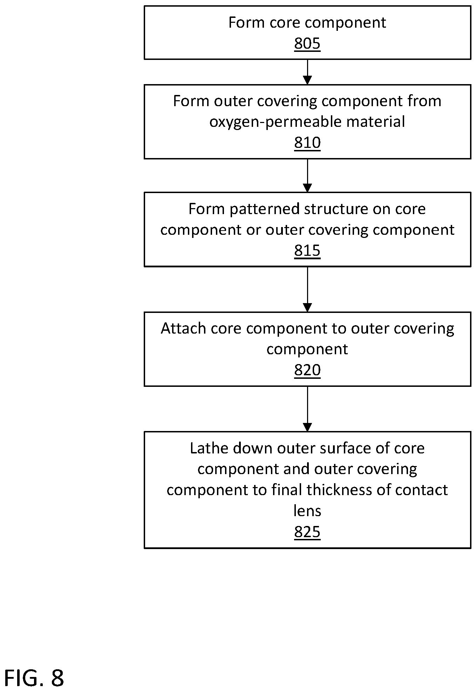

FIG. 8 is a flowchart of a process for forming a scleral contact lens, in accordance with some embodiments. At 805, a core component is formed. The core component may correspond to the core component 605 illustrated in FIGs. 6A-6C or the core component 705 illustrated in FIGs. 7A and 7B. The core component may be formed to be thicker than the final desired core of the contact lens, and comprise one or more registration features for aligning an outer covering, inner covering, one or more payload components, etc. In some embodiments, the core component is formed from a non-gas permeable material. For example, the material of the core component may be selected to provide structural strength to the contact lens. At least a portion of an outer surface of the core component is shaped to receive a surface of an outer covering component.

At 810, an outer covering component is formed from an oxygen permeable material. The outer covering component comprises at least an inner surface shaped to be mounted on the core component. In some embodiments, the outer covering component is formed thicker in comparison to the final desired outer covering, to facilitate handling and assembly.

At 815, a patterned structure is formed on the core component or the outer covering component. The patterned structure comprises a plurality of recesses interspersed between a plurality of supports. For example, in some embodiments, the patterned structure may comprise one or more blind hole patterns formed on an inner surface of the outer covering component, wherein the blind holes correspond to the recesses and portions of the outer covering component between the blind holes comprise the supports. In some embodiments, portions of the outer covering component between the blind holes may be formed into one or more pillars to function as supports. In some embodiments, the patterned structure may comprise a plurality of circumferential grooves formed on an inner surface of the outer covering component or a portion of the outer surface of the core component, wherein the grooves correspond to recesses and ridges formed between pairs of adjacent grooves correspond to supports.

At 820, the outer covering component is attached to the core component. The outer covering component may be mounted to the core component such that the outer covering component and core component directly contact each other at the supports of the patterned structure. In some embodiments, the outer covering component is attached to the core component via a glue layer formed at the edge of the outer covering component. For example, the glue layer may be formed within a space between the outer covering component and the core component extending to an outer support of the patterned structure, which prevents the glue from entering the recesses of the patterned structure. In some embodiments, an inner surface of the outer covering component is covered with a coating of hydrophilic material prior to the outer covering component being attached to the core component, to improve lubricity of the contact lens and/or to preserve gas permeability of the outer covering component.

At 825, the outer surface of the core component and outer covering component may be shaped to a final desired thickness of the contact lens. In some embodiments, the core component and outer covering component are cut down or lathed to form the final core and outer covering of the contact lens. In some embodiments, once the core component and outer covering component are shaped to the desired form and thickness, a coating of hydrophilic material may be applied to the outer surface of the outer covering.

While the above description primarily discusses a patterned structure associated with the interface between the outer covering and the core, similar techniques may be used to form a patterned structure associated with the interface between the inner covering and the core (e.g., a patterned structured formed on a portion of an inner surface of the core, or an outer surface of the inner covering). This may allow the inner covering to be formed with reduced thicknesses in areas corresponding to the recesses of the patterned structure, which are supported by the supports of the patterned structure.

In some embodiments, because the patterned structure can potentially affect passage of light through the contact lens, the patterned structure is only formed on portions of the contact lens that are outside the central zone of the contact lens. In some embodiments, the outer covering may be disposed entirely outside the central zone of the contact lens. As such, the patterned structured may be formed on the inner surface of the outer covering or on portions of the outer surface of the core to where the outer covering is to be mounted, without substantially affecting passage of light to the user's eye. On the other hand, in embodiments where the inner covering is positioned to cover all or most of the wearer's cornea (e.g., to facilitate even distribution of oxygen across the wearer's cornea through the inner covering), the patterned structure may be formed only on portions of the inner covering or core outside the central zone of the contact lens. It may not be necessary to form a patterned structure associated with the inner covering if a desired level of oxygenation can be achieved with an inner covering of substantially uniform thickness.

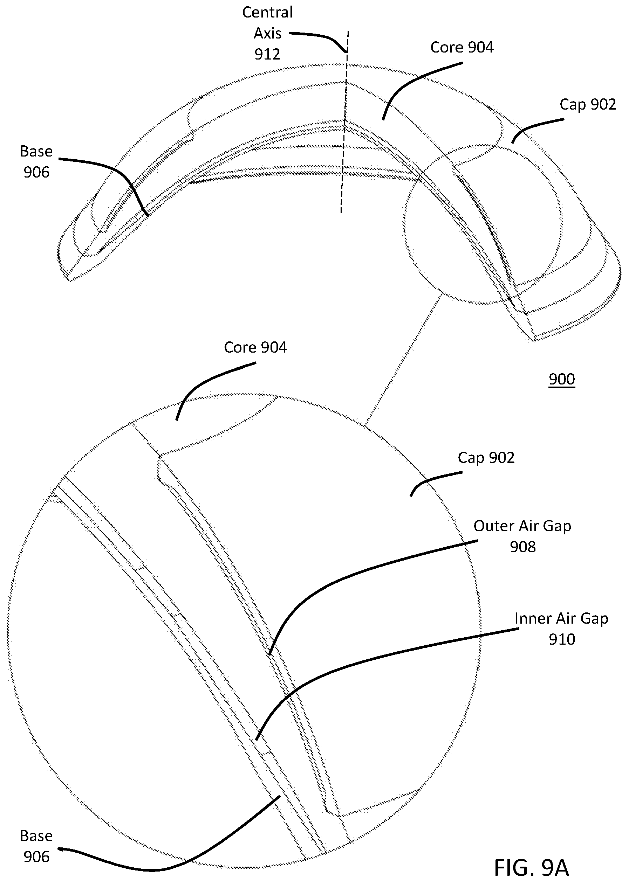

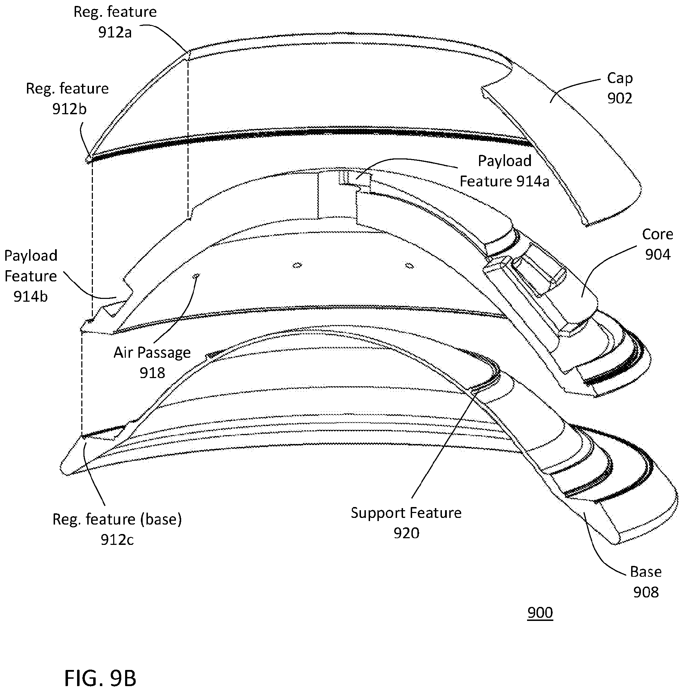

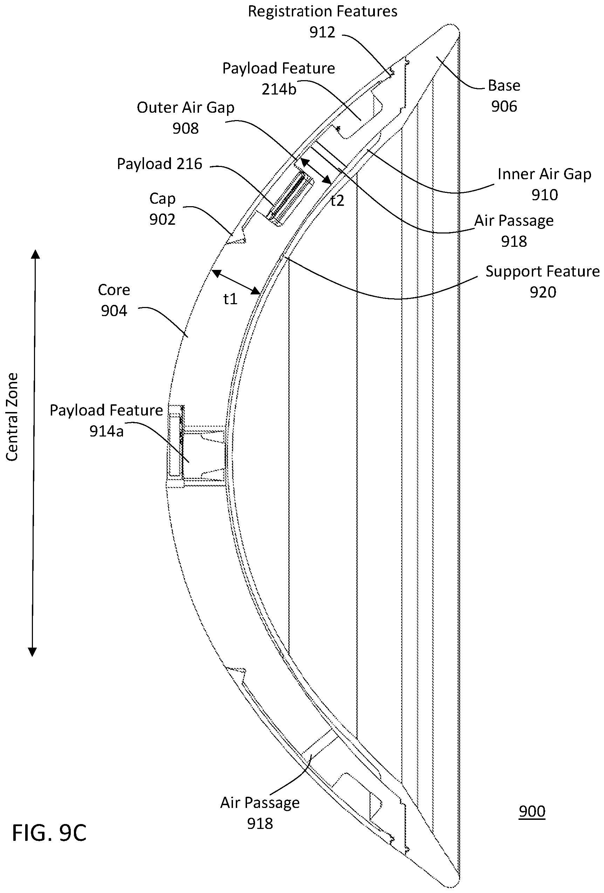

While FIGs. 2-3 above show a particular configuration for a three-layer contact lens able to accommodate a thick payload while providing adequate oxygenation to the eye (e.g., where the core 210 has a base surface 216 that mounts to the sclera of the eye when the contact lens is worn), it is understood that other configurations may be used. For example, in some embodiments, a contact lens may comprise a core, an outer covering (which may also be referred to as a "cap"), and an inner covering (also referred to as a "base"), in which the inner covering or base is formed is formed to support the contact lens on the sclera of the eye, instead of the core supporting the contact lens on the sclera as illustrated in FIGs. 2-3. Examples of this type of configuration are discussed in relation to FIGs. 9-11 below.

FIG. 9A is a simplified perspective view of a three layer contact lens 900 able to accommodate a thick payload (e.g., greater than 500 um thick), in accordance with some embodiments. As illustrated in FIG. 9A, the contact lens 900 comprises a cap 902, a core 904, and a base 906. The cap 902 is positioned adjacent to an outer surface of the core 204, while the base 906 is positioned adjacent to an inner surface of the core 904. Together, the cap 902, core 904, and base 906 correspond to the three layers of the three layer contact lens 900. When worn by a wearer, the base 906 is positioned adjacent to the wearer's eye (cornea and sclera) and separated from the surface of the wearer's eye by a tear layer, while the cap 902 and portions of the core 204 are exposed to air (except when the wearer closes their eye or blinks).

The cap 902, core 904, and base 906 are shaped such that when the contact lens 900 is assembled, an outer air gap 908 is formed between the cap 902 and the core 904, and an inner air gap 910 is formed between the core 904 and the base 906. Because the outer and inner air gaps 908 and 910 are each entirely enclosed by their respective structures, the outer and inner air gaps are not directly exposed to the external environment, preventing any debris or other contaminants from the outside air or from the tear layer from potentially reaching the outer air gap 908 or inner air gap 910.

Similar to the outer covering 220, inner covering 230, and core 210 of the contact lens illustrated in FIGs. 2-3, the cap 902 and base 906 of the contact lens 900 are each relatively thin in comparison to the core 904, and are made of materials that are permeable to oxygen such as RGP plastic, while the core 904 is sufficiently thick to accommodate a desired payload, such as a femtoprojector or one or more other types of electronic components. The cap 902 may have an annular shape, such that when the cap 902 is placed over the core 904, the cap 902 covers only areas within the peripheral zones of the core, while leaving the central zone of the core 904 exposed to the air.

The cap 902 is exposed to air or separated from air by a thin tear layer (typically about 10 $\mu$m in thickness) that forms over the cap 902. As such, oxygen is able to diffuse from the surrounding air through the gas permeable material of the cap 902 (and thin tear layer) to reach the outer air gap 908. The oxygen collected in the outer air gap 908 is then able to diffuse rapidly through one or more air passages 918 (not shown in FIG. 9A) through the core 904 to traverse through the thickness of the core 904 to reach the inner air gap 910. From the inner air gap 910, oxygen diffuses through the gas permeable material of the base 906 to reach the tear fluid layer and underlying cornea of the wearer. Because the inner air gap 910 may be configured to cover a large portion of the wearer's cornea, oxygen may be substantially evenly distributed across the wearer's cornea through the base 906. As with the contact lens 200 illustrated in FIG. 2, the oxygen transmissibility of the contact lens 900 is defined primarily by the thicknesses of the cap 902 and base 906, and not by thickness of the outer air gap 908, inner air gap 910, or the core 904, allowing for the thickness and material of the core 904 to be selected to be able to accommodate a desired payload and provide sufficient structural strength to support the payload.

FIG. 9B illustrates a more detailed exploded view of the components of the three-layer contact lens 900, in accordance with some embodiments. FIG. 9C shows a more detailed cross-sectional view of the three-layer contact lens 900, in accordance with some embodiments. As illustrated in FIGs. 9B and 9C, the cap 902, core 904, and base 906 are overlaid on top of each other to form the contact lens 900, and may be aligned using one or more registration features. For example, the cap 902 may comprise a first registration feature 912a and a second registration feature 912b configured to interface with corresponding registration features of the core 904. In some embodiments, the first registration feature 912a corresponds to a radius of the center hole of the cap 902, while the second registration feature 912b corresponds to a peripheral radius of the cap 902. The base 908 may comprise a registration feature 912c configured to interface with a corresponding registration feature of the core 904.

As illustrated in FIG. 9C, the cap 902 and the core 904 are shaped to define the outer air gap 908 between the cap 902 and core 904. In addition, the cap 902 and core 904 are shaped such that an outer surface of the cap 902 aligns with an outer surface of the core 904 in the central zone when the cap 902 is placed over the core 904, in order for the collective outer surface of the contact lens 900 as defined by the cap 902 and core 904 to be substantially smooth, and not have protrusions or discontinuities. For example, the core 904 may have a first thickness t1 in the central zone, and a second thickness t2 in portions of the peripheral zone that is less than the first thickness t1. When the cap 902 is placed over the area of the peripheral zone having the second thickness t2, the outer surface of the cap 902 will aligns with the outer surface of the core 904 in the central zone having the first thickness t1. In addition, the cap 902 and the core 904 are further shaped such that a bottom surface of the cap 902 is spaced apart from an outer surface of the core 904 when the cap 902 is placed over the core 204, creating the outer air gap 908 between the core 904 and the cap 902.

In some embodiments, at least one of the cap 902 and the core 904 has a non-uniform thickness between the registration features 912a/b in order to define the outer air gap 908 between the cap 902 and the core 904. Similarly, the base 906 may have a non-uniform thickness in order to define the inner air gap 910 between the base 906 and the core 904. For example, as illustrated in FIG. 9C, the inner surface of the core 904 may be substantially smooth, while the thickness of the base 906 varies between the registration feature 912c and the central axis of the contact lens so as to form a space between the base 908 and the inner surface of the core 904, defining the inner air gap 910 when the base 906 and core 904 are attached to each other.

In some embodiments, the core 904 comprises one or more features for accommodating one or more payload components. For example, as illustrated in FIG. 9B, the core 904 has a through-hole 914a within the central zone of the core for accommodating an electrical device such as a femtoprojector. The femtoprojector may be placed within the through-hole 914a and secured using an encapsulating material, which functions both to fix the position of the femtoprojector and to protect the femtoprojector from the outside environment.

In addition, the core 904 may comprise one or more payload features 914b in a peripheral region of the core, to accommodate one or more additional payload components. For example, the payload feature 914b may be in the form of a groove formed around a circumference of the core 904, having a depth sufficient for winding the power coil around the core 904, such that the power coil does not protrude from the payload feature 914b. The core 904 may further comprise additional payload features for accommodating additional payload components 916 (e.g., as illustrated in FIG. 9C), wiring or electrical connections between payload components, etc.

In some embodiments, the payload feature 914b within the peripheral region of the core 904 is located under the outer air gap 908 when the cap 902 is placed over the core 904. In some embodiments, the payload components (e.g., power coil) within the payload features may be encapsulated in an adhesive or other material such that the components are not exposed to the air within the outer air gap 908. In other embodiments, the payload components are exposed to the air within the outer air gap 908. For example, as illustrated in FIG. 9C, the payload feature 914b may be located under the cap 902, such that the payload 916 (e.g., a power coil) is located within the outer air gap 908. This enables payload components within the core to be located in the periphery areas of the core. In some embodiments, the core 904 may contain at least one payload component closer to the center of the core 904 in comparison to the one or more air passages 918 traversing the core, and at least one payload component further from the center than the one or more air passages 918.

While FIG. 9B illustrates certain payload features in the periphery regions of the core 904 being formed on the outer surface of the core 904 (e.g., payload feature 914b), in some embodiments, one or more of the payload features may be formed on the inner surface of the periphery region of the core 904.

While FIG. 9 illustrates some payload features formed on areas of the core overlapping the cap (e.g., payload feature 214b formed under the cap 902), in embodiments where an interface between the core and the outer covering / cap comprises a patterned structure (e.g., on the inner surface of the outer covering, or on the outer surface of the core), such that that illustrated in FIGs. 3-7, portions of the outer surface of the core on which the payload features may be formed may be restricted to portions that do not overlap with the patterned structure. However, because the use of a patterned structure may potentially reduce a surface area on the core covered by the outer covering / cap, additional surface area on the core not overlapping with the outer covering / cap may be available for forming payload features for accommodating payload components. In addition, in some embodiments where the patterned structure corresponds to only a portion of the outer covering, one or more payload features may be formed in portions of the core overlapping the outer covering but not overlapping with the patterned structure.

The air passages 918 are formed within the core 904, and traverse the thickness of the core 904 to connect the outer air gap 908 to the inner air gap 910. Because the outer air gap 908 does not extend over the central zone of the core 904, the air passages 918 are formed in the peripheral zones of the core 904. In some embodiments, as illustrated in FIG. 9C, the air passages 918 are oriented to be substantially perpendicular to the outer and inner surfaces of the core 904, and connect laterally overlapping portions of the outer air gap 908 and inner air gap 910. As used herein, two entities may be referred to as "laterally overlapping" if they intersect a common line perpendicular to the outer surface of the contact lens 900.

In some embodiments, each of the air passages is substantially cylindrical in shape (e.g., having a circular cross-section). However, in other embodiments, the air passages 918 may have different shapes (e.g., different shaped cross-sections). The cross-sectional area of the air passages 918 is configured to allow for an amount of air flow between the outer and inner air gaps that is sufficient for oxygenating the cornea of the wearer's eye.

In some embodiments, the base 906 comprises one or more support features 920 to provide structural support to the inner air gap 910. Because the inner air gap 910 may extend over both the central zone and periphery areas of the core 904 in order to allow for more even distribution of oxygen through the base 906 to reach the wearer's cornea, support features 920 within the inner air gap 910 may be useful for maintaining gap distance and overall structural integrity of the contact lens. The support features 920 may comprise one or more ridges or protrusions. For example, as illustrated in FIGs. 9B and 9C, the support feature 920 comprises a ridge protruding from the outer surface of the base 908 located at a particular radius from a central axis of the base 908. In some embodiments, the radius of the support feature 920 may be similar to the radius of the center hole of the annular cap 902. However, in order to avoid blocking oxygen flow within the inner air gap 910, the support feature 920 may extend only partway through the height of the inner air gap 910 (e.g., such that air can flow over the support feature 920), be discontinuous (e.g., not extending all the way around in a circle), or some combination thereof. Even if the support feature 920 does not extend all the way across the inner air gap 910 to contact an opposing surface (e.g., the inner surface of the core 904), the support feature 920 may still function to limit an amount of deformation of the base 906 and the inner air gap 910.

In some embodiments, instead of or in addition to support feature 920, the inner air gap 910 may contain one or more spacers (not shown), such as plastic micro balls, cylindrical or rectangular posts, etc., placed between the core 904 and the base 906 to help maintain the structural integrity of the contact lens and maintain gap distance of the inner air gap 910. In addition, in some embodiments, the support feature 920 may be formed as part of the inner surface of the core 904 instead of or in addition to on the outer surface of the base 908. In some embodiments, the core 904 and/or the cap 902 may have one or more support features for providing structural support for the outer air gap 908. In some embodiments, the one or more support structures may extend along a radius of the cap 902, core 904, or cap 906. In some embodiments, at least one of the inner surface of the cap 902 and the outer surface of the base 906 comprises a matrix of grooves, in which the outer or inner air gap is defined by the space between the grooves and the core 904, the remaining portions of the surface of the cap or core serving as support features. In some embodiments, the support features may comprise a patterned structure comprising a plurality of recesses interspersed between a plurality of supports, such as those illustrated in FIGs. 4-7.

In some embodiments, the components of the contact lens (the cap 902, core 904, and base 906) are manufactured separately and assembled together at a later time. For example, the cap 902, core 904, and base 906 may each correspond to a prefabricated component. In some embodiments, the cap, core and base are assembled together using an adhesive. One or more interfaces may be formed on these parts in order to ensure proper alignment and a reliable adhesive bond line for assembling the parts together. For example, the cap may be aligned with the core at an alignment stop surface. The cap includes a protrusion that displaces glue deposited in a recess formed in the core. The displacement forms a controlled thickness bond line of glue on one side of the protrusion while some glue flows just to an outer surface of the contact lens through capillary action. This allows for the parts to be assembled together without the glue overflowing if more than an ideal amount of glue is deposited.

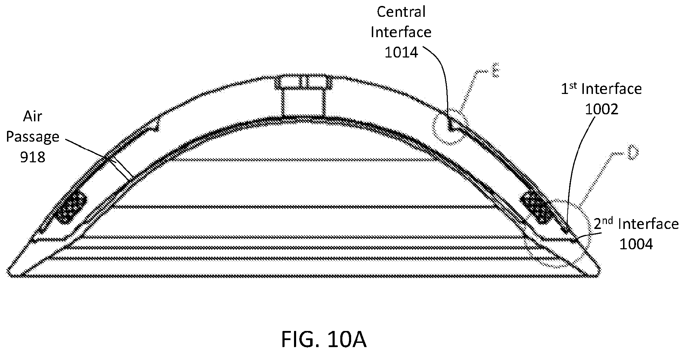

FIG. 10A shows a cross-sectional view of a three-layer contact lens, in accordance with some embodiments. As discussed above, the components corresponding to the layers of the contact lens (i.e., cap, core, and base) may be manufactured separately and connected to each other using an adhesive material such as glue. The cap, core, and base may contact each other at one or more glue interfaces. For example, as illustrated in FIG. 10A, a peripheral edge of the cap 902 connects to the core 904 at a first interface 1002, while a central edge of the cap 902 connects to the core 904 at the central interface 1014. On the other hand, a peripheral edge of the core 904 connects to the base 906 at a second interface 1004.

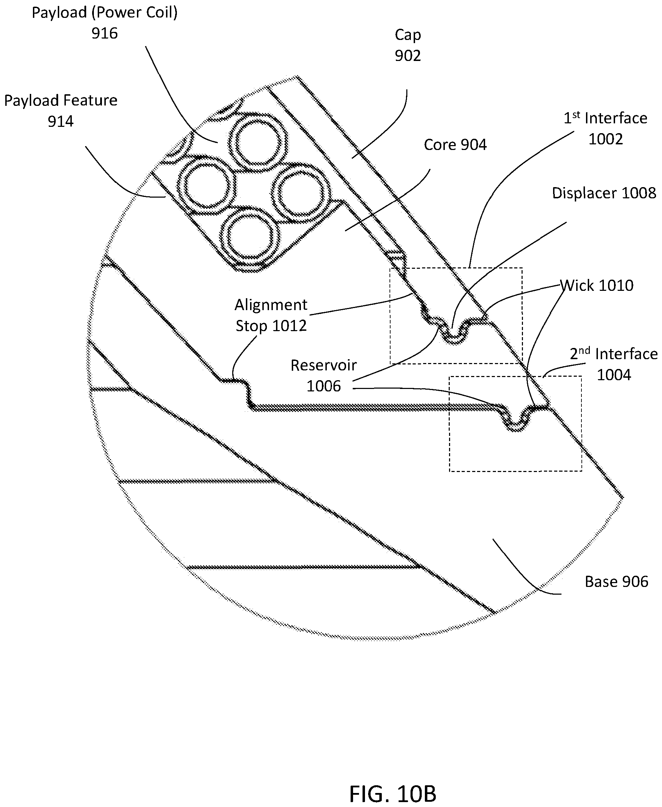

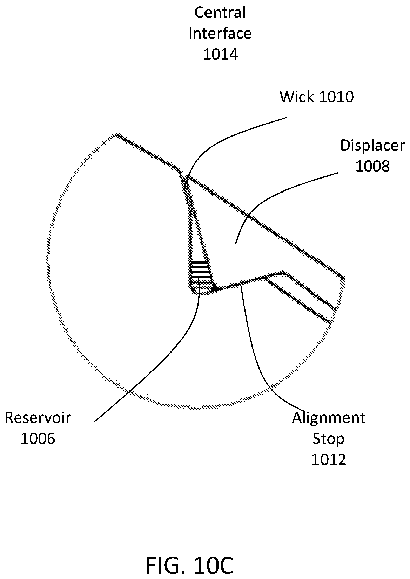

FIG. 10B illustrates a more detailed view of region D of FIG. 10A, which includes the first interface 1002 between the cap and core, and second interface 1004 between the core and base. FIG. 10C illustrates a more detailed view of region E of FIG. 10A, which includes the central interface 1014 connecting the cap to the core of the contact lens. Each of the glue interface 1002, 1004, and 1014 comprises features to align the respective components being connected, as well as one or more features for controlling the flow of glue between the components, such that glue is prevented from overflowing from the interface onto the outer surfaces of the contact lens, even if more than an ideal amount of glue is deposited between the components at the glue interface.

The first glue interface 1002, as illustrated in FIG. 10B, comprises a reservoir 1006, a displacer 1008, and a wick 1010. The displacer 1008 is formed as a convex feature (e.g., a protrusion or ridge) on the cap 902, while a corresponding concave feature (e.g., a depression or groove) is formed on the core 904. In addition, a portion of the inner surface of the cap 902 and a portion of the outer surface of the core 904 (hereinafter, "alignment surfaces") may function as an alignment stop 1012 that aligns the cap 902 to the core 904 when the cap 902 is placed over the core 904.

Prior to assembly, an amount of glue is placed into the concave feature formed on the core 904 (hereinafter referred to as the "recess"). When the cap 902 is placed on the core 904, the alignment surfaces of the cap 902 and the core 904 contact each other to form the alignment stop 1012 and radially align the cap 902 and core 904 relative to each other. In addition, the alignment surfaces may be shaped such that the stop 1012 also aligns cap 902 to the core 904 in an axial direction.

When the cap 902 and the core 904 are aligned, the displacer 1008 on the cap 902 aligns with the corresponding recess on the core 904, and displaces glue from the recess. At least a portion of the displaced glue is drawn up the wick 1010, which is formed as the narrowing gap between the surfaces of the cap 902 and core 904 as the cap 902 is aligned with the core 904. The displaced glue is drawn up the wick 1010 towards a seam at the outer surfaces of the cap 902 and the core 904 through surface tension and capillary action.

The recess is larger than the displacer 1008, such that when the displacer 1008 is positioned within the recess, a reservoir 1006 is formed on a side of the displacer 1008 opposite from the wick 1010 to accommodate any excess glue that would otherwise flow past the seam between the cap 902 and core 904. For example, the reservoir 1006 of first glue interface 1002 illustrated in FIG. 10 may include excess space on a side of the displacer 1008 opposite from the wick 1010, allowing for any excess glue to flow in a direction opposite from and away from the wick 1010. Thus, the displacer 1008 may divide the glue into a first amount that flows through the wick 1010, and a second excess amount that remains in the reservoir 1006 on the opposite side of the displacer 1008 as the wick 1010, ensuring that the excess glue is not pushed past the seam between the cap 902 and core 904.

The second glue interface 1004 may be constructed similarly to the first glue interface 1002 as described above. For example, the second glue interface 1004 may be formed by a displacer of the core 904 being aligned with (e.g., through corresponding alignment surfaces of the core 904 and base 906) a corresponding recess on the base 906. When the displacer of the core is placed within the reservoir of the base, at least a portion of the glue within the reservoir flows into the wick formed by the gap between the core and base, while a remaining excess portion of the glue is pushed into a reservoir formed on an opposite side of the displacer as the wick.

As illustrated in FIG. 10A, due to the annular shape of the cap 902, the cap 902 may be attached to the core 904 via at least two different glue interfaces (e.g., the central interface 1014 and a peripheral interface (corresponding to the first interface 1002 described above). In some embodiments, the displacer 1008 of the central interface 1014, as illustrated in FIG. 10C, is substantially wedge-shaped, having a first surface that serves as an alignment surface for the cap 902 for aligning with a corresponding alignment surface of the core 904 to form the alignment stop 1012, and a second surface that aligns with a second surface of the core 904 to form the wick 1010. As illustrated in FIG. 10C, the reservoir 1006 may be formed on the same side of the displacer 1008 as the wick 1010. When the cap 902 is placed over the core 904, the displacer 1008 aligns with a recess formed on the core 904, and pushes glue that has been deposited within the recess towards the wick 1010 and a seam formed between the cap 902 and the core 904. In addition, any excess amount of glue that may have been deposited within the recess remains within the reservoir 1006 formed between the displacer 1008 and the recess, preventing glue from overflowing from the seam.

While FIGs. 10B and 10C illustrate the displacer and reservoir for each glue interface located on particular components, in other embodiments, the displacer and reservoir may be formed on different components. For example, in some embodiments, the reservoir of the first glue interface 1002 may be formed on the cap 902, and the displacer on the core 904. Which component the reservoir and displacer are formed on may be based upon an expected orientation of the contact lens during assembly.

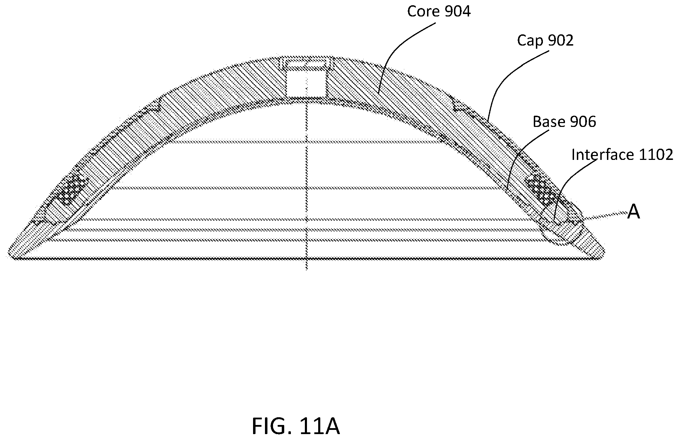

FIG. 11A shows a cross-sectional view of a three-layer contact lens having another structural interface between the cap, core, and base of a contact lens, in accordance with some embodiments. As illustrated in FIG. 11A, the cap, core, and base are positioned such that both the cap 902 and the core 904 are placed on a single surface of the base 906. This allows for the cap 902, core 904, and base 906 to be assembled with one less seam on the outer surface of the contact lens, in comparison to the configuration illustrated in FIGs. 10A and 10B.

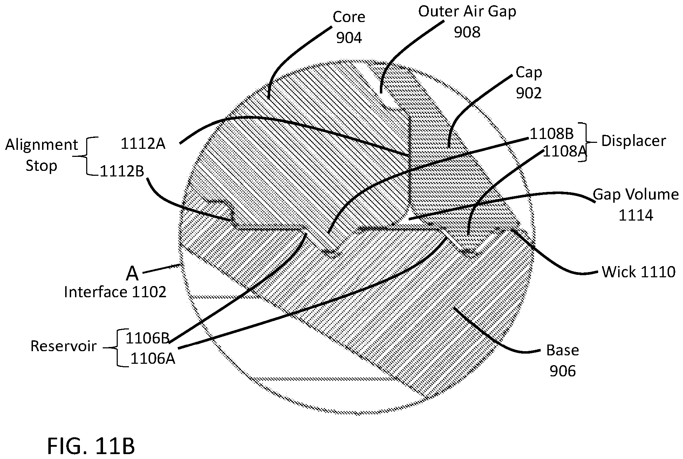

FIG. 11B shows a more detailed view of region A of FIG. 11A, containing the glue interface 1102. At the glue interface 1102, the base 906 may have an alignment surface configured to form an alignment stop 1112B with the core 904, in order to align the core 904 with the base 906. The base 906 may also have formed thereon a pair of recesses into which glue can be deposited.

Each of the cap 902 and the core 904 may have formed thereon a respective displacer 1108A and 1108B configured to fit into a respective recess of the base 906. In addition, the cap 902 and core 904 each have alignment surfaces forming an alignment stop 1112A between them for aligning the cap 902 with the core 904. As such, when the core 904 is placed over and aligned with the base 906 using the alignment stop 1112B, and the cap 902 is placed over and aligned with the core 904 using the alignment stop 1112A, the cap 902 will be aligned with the base 906, such that the displacer 1108A of the cap 902 is positioned within its corresponding recess on the base 906.

When the cap 902 and core 904 are placed over the base 906, a wick 1110 is formed on one side of the displacer 1108A of the cap 902 by the surfaces of the cap 902 and the base 906. A portion of the glue in the recess flows into the wick 1110 through surface tension and capillary action. However, a remaining excess amount of glue is pushed by the displacer 1108A into the reservoir 1106A on the opposite side of the displacer 1108A as the wick 1110, allowing for the wick 1110 to receive only an amount of glue needed to fill the seam between the cap 902 and the base 906 without having glue flow over the seam, even if more than an ideal amount of glue was deposited in the recess on the base 906.

The displacer 1108B of the core 904 displaces the glue deposited within the corresponding recess on the base 906. For example, a first amount of glue flows into the wick 1110 formed between the core 904 and the base 906. In addition, a second amount of excess glue is pushed by the displacer 1108B into the reservoir 1106B.

In some embodiments, the core 904, cap 902, and base 906 are shaped such that a gap volume 1114 is formed between the core 904, cap 902, and base 906. The gap volume 1114 is part of the reservoir 1106A and is able to receive excess glue displaced by the displacer 1108A. In addition, because the interface between the core 904 and the base 906 does not include a seam on the outer surface of the contact lens, the displacer 1108B may push excess glue into the reservoir 1106B or into the the gap volume 1114.

In some embodiments, attaching the cap 902 and core 904 onto a single surface of the base 906 (as illustrated in FIGs. 11A and 11B) may allow for a greater tolerance of excess glue, due to the gap volume 1114 that can be formed between the cap 902 and the core 904. In addition, the resulting contact lens will only have one seam on the outer surface of the lens (e.g., a seam between the cap 902 and the base 908, potentially reducing a chance for outside contaminants (e.g., dust, tear fluid, etc.) to enter the contact lens through a seam.

As such, the components of the contact lens may be connected via one or more glue interfaces, where each glue interface comprising a protrusion that displaces glue deposited in a recess such that a first amount of glue flows to a seam formed between the components, and a second excess amount of glue is displaced into an excess reservoir volume, preventing overflow of glue beyond the outer surface of the contact lens, even if more than an ideal amount of glue is deposited.

While FIGs. 10 and 11 illustrate glue interfaces structures that may be used to attach the cap 902, core 904, and base 906 in contact lenses where the base 906 mounts to the sclera of the wearer's eye, it is understood that the glue interface structures discussed above can be used in contact lens having other configurations, such as contact lenses in which the core comprises a base surface that mounts to the sclera of the wearer's eye (e.g., as illustrated in FIG. 2). For example, in some embodiments, the outer covering 220 may be attached to the core 210 using glue interface structures similar to of interfaces 1002 and 1014 illustrated in FIG. 10. In addition, the inner covering 230 may be attached to the core 210 using a glue interface structure similar to that of the interface 1004, but where the wick 1010 faces a seam between the inner surfaces of the inner covering 230 and core 210, instead of the outer surfaces as illustrated in FIG. 10.

In some embodiments, instead of being attached using glue, the components of the contact lens may be place together using a friction fit or a snap-on fit. For example, in some embodiments, the displacer of a first component may have one or more features configured to snap onto one or more features within a recess on a second component, allowing for the components to be assembled together without glue. In other embodiments, the components of the contact lens may be attached together using a laser weld or an ultrasonic bond.

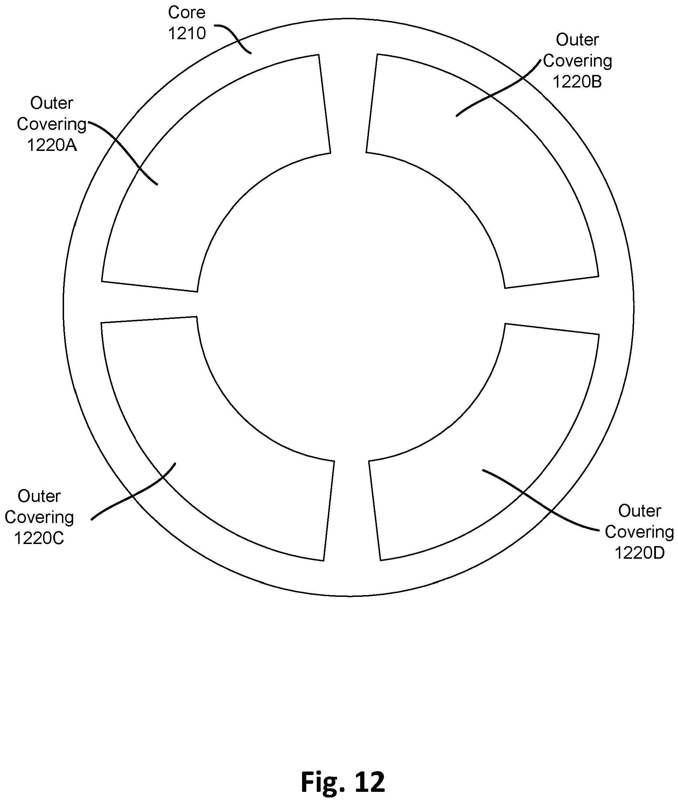

FIG. 12 shows a top down view of a contact lens, in which the outer covering is divided into separate pieces. While previous figures have illustrated the outer covering or (e.g., outer covering 220 illustrated in FIG. 2, cap 902 as illustrated in FIG. 9) as a single annular piece, in some embodiments, the outer covering may have several separate pieces. In FIG. 12, the outer covering 1220 is divided into four separate pieces 1220A-D. When placed over the core 1210, each of the outer covering pieces 1220A-D forms a separate outer air gap between it and the core 1210, each of which is connected to the inner air gap via an air path. While FIG. 12 shows a space between each of the outer covering pieces 1220A-D, in some embodiments, the outer covering pieces 1220A-D directly abut each other when placed over the core 1210. Using separate pieces can reduce the mechanical stress on each piece.

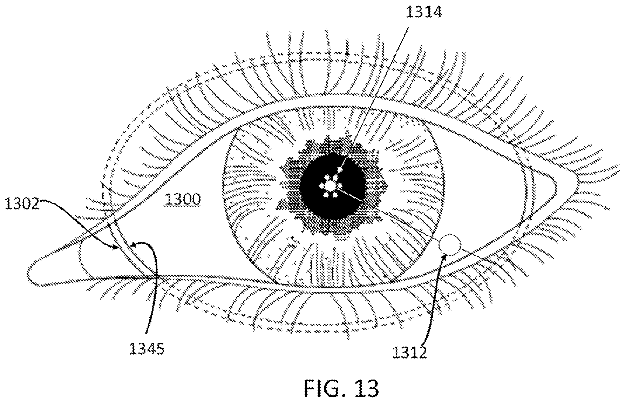

FIG. 13 shows an oval scleral contact lens display mounted on a user's eye. The contact lens 1300 has a non-circular perimeter 1302 and extends below the upper and lower eyelids. In this example, the contact lens 1300 has an "oval" perimeter 1302 that is elongated along the direction of the eye opening. Due to the curvature of the eye, the actual shape of the perimeter is three-dimensional. However, for convenience, it will be referred to as oval. Due to the size of the contact lens 1200, it is partially covered by the user's eyelids. FIG. 13 also shows the contact lens 1300 carrying a payload, which may comprise a set of femtoprojectors 1314, electronics 1312, and coil 1345.

One advantage of a non-circular perimeter is that the contact lens is larger and has more space to carry payloads. Another advantage is that the perimeter is larger so that larger coils 1345 may be used. For example, the conductive coil 1345 may be constructed so that it lies parallel to and within 0.3 mm to 3 mm of the perimeter 1302 (e.g., the coil 1345 lies within 2 mm of the perimeter 1302). Although the contact lens is larger with a non-circular perimeter, the inner covering and inner air gap may have the same circular size and shape as described previously since that is sufficient to oxygenate the cornea.

The foregoing description of the embodiments of the invention has been presented for the purpose of illustration; it is not intended to be exhaustive or to limit the invention to the precise forms disclosed, but merely illustrates different examples. It should be appreciated that the scope of the disclosure includes other embodiments not discussed in detail above. Therefore, the scope of the invention should be determined by the appended claims.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

**Claims**

1. A scleral contact lens (200) that mounts to a sclera (106) of an eye (102), comprising:

   a core (210) having an outer surface (212) that faces outwards away from the eye, and an inner surface (213) that faces inwards towards a cornea (104) of the eye; the core carrying a payload; a gas-permeable outer covering (220) over the core's outer surface, the outer covering and the core's outer surface forming an outer interstital cavity (225) therebetween that receives oxygen from the external environment through the gas-permeable outer covering; and a gas-permeable inner covering (230) under the core's inner surface and disposed over the cornea of the eye, the inner covering and the core's inner surface forming an inner interstital cavity (235) therebetween that passes oxygen to the cornea of the eye through the gas-permeable inner covering; wherein the core contains an air path (240) traversing the core from the outer interstital cavity to the inner interstital cavity; wherein at least one of the core's outer surface and the outer covering's inner surface comprises a patterned structure, the patterned structure has a plurality of recesses interspersed with a plurality of supports, the core and outer covering contact each other at the supports, and the recesses form the outer interstital cavity; and wherein the patterned structure comprises a pattern of blind holes, and wherein the pattern of blind holes comprises:

   a first plurality of non-overlapping blind holes (410), each having a first depth and a first radius; and a second plurality of blind holes (440) overlaying the first plurality of blind holes, each having a second depth shallower than the first depth and a second radius larger than the first radius, wherein the second plurality of blind holes overlap with each other to form a plurality of columns (430) between the first plurality of blind holes.

2. The scleral contact lens of claim 1 wherein the outer covering has an annular shape with a center hole having a diameter of at least 5mm.

3. The scleral contact lens of claim 1 wherein the core includes a recess for the outer covering, so that the outer covering and the core's adjoining outer surface form a smooth surface for the contact lens.

4. The scleral contact lens of claim 1 wherein the inner covering and inner interstital cavity each has a diameter of at least 10 mm.

5. The scleral contact lens of claim 1, wherein the inner and outer interstital cavities laterally overlap and the one or more air passages are oriented substantially perpendicular to both the inner and the outer interstital cavities.

6. The scleral contact lens of claim 1, wherein the outer covering's inner surface comprises the patterned structure.

7. The scleral contact lens of claim 6, wherein, within the patterned structure, the outer covering has a thickness of not more than 100um over at least 1/3 of an overall area of the patterned structure.

8. The scleral contact lens of claim 1, wherein the patterned structure covers an area of not more than 100mm$^2$

9. The scleral contact lens of claim 1, wherein a distance to a nearest support does not exceed 0.5mm for any point in the outer interstitial cavity.

10. The scleral contact lens of claim 1, wherein the outer covering has an annular shape with an area of not more than 100mm$^2$.

11. The scleral contact lens of claim 1, wherein the payload is an electronic payload comprising a femtoprojector (114) that projects images onto a retina of the eye.

12. The scleral contact lens of claim 11, wherein the payload is an electronic payload, and wherein the payload further comprises an antenna for data communication to outside the contact lens, driver circuitry for the femtoprojector, a power source, and electrical interconnects that connect the electrical components.

13. The scleral contact lens of claim 1 wherein the contact lens has an oval perimeter.

14. The scleral contact lens of claim 1, wherein the payload is an electronic payload, and wherein an outer surface of the outer covering and the inner surface of the outer covering are coated with a hydrophilic material.

15. The scleral contact lens of claim 1, wherein a portion of the core not covered by the outer covering is coated with a hydrophilic material.

**Patentansprüche**

1. Sklerale Kontaktlinse (200), die an einer Sklera (106) eines Auges (102) angebracht wird, umfassend:

   einen Kern (210) mit einer Außenfläche (212), die vom Auge weg nach außen gerichtet ist, und einer Innenfläche (213), die nach innen zur Hornhaut (104) des Auges gerichtet ist; wobei der Kern eine Nutzlast trägt;
   eine gasdurchlässige äußere Abdeckung (220) über der Außenfläche des Kerns, wobei die äußere Abdeckung und die Außenfläche des Kerns dazwischen einen äußeren interstitiellen Hohlraum (225) bilden, der durch die gasdurchlässige äußere Abdeckung Sauerstoff aus der äußeren Umgebung aufnimmt; und
   eine gasdurchlässige innere Abdeckung (230) unter der Innenfläche des Kerns, die über der Hornhaut des Auges angeordnet ist, wobei die innere Abdeckung und die Innenfläche des Kerns dazwischen einen inneren interstitiellen Hohlraum (235) bilden, der Sauerstoff durch die gasdurchlässige innere Abdeckung zur Hornhaut des Auges leitet;
   wobei der Kern einen Luftpfad (240) enthält, der den Kern von dem äußeren interstitiellen Hohlraum zu dem inneren interstitiellen Hohlraum durchquert;
   wobei mindestens eine der Außenfläche des Kerns und der Innenfläche der äußeren Abdeckung eine gemusterte Struktur umfasst, wobei die gemusterte Struktur eine Mehrzahl von Vertiefungen aufweist, die mit einer Mehrzahl von Stützen durchsetzt sind, wobei der Kern und die äußere Abdeckung einander an den Stützen berühren und die Vertiefungen den äußeren interstitiellen Hohlraum bilden; und
   wobei die gemusterte Struktur ein Muster von Sacklöchern umfasst, und wobei das Muster von Sacklöchern umfasst:

   eine erste Mehrzahl von nicht überlappenden Sacklöchern (410), die jeweils eine erste Tiefe und einen ersten Radius aufweisen; und
   eine zweite Mehrzahl von Sacklöchern (440), die die erste Mehrzahl von Sacklöchern überlagern, wobei jedes eine zweite Tiefe aufweist, die geringer ist als die erste Tiefe, und einen zweiten Radius, der größer ist als der erste Radius, wobei die zweite Mehrzahl von Sacklöchern einander überlappen, um eine Mehrzahl von Spalten (430) zwischen der ersten Mehrzahl von Sacklöchern zu bilden.

2. Sklerale Kontaktlinse nach Anspruch 1, wobei die äußere Abdeckung eine ringförmige Form mit einem Mittelloch mit einem Durchmesser von mindestens 5 mm aufweist.

3. Sklerale Kontaktlinse nach Anspruch 1, wobei der Kern eine Vertiefung für die äußere Abdeckung aufweist, so dass die äußere Abdeckung und die angrenzende Außenfläche des Kerns eine glatte Oberfläche für die Kontaktlinse bilden.

4. Sklerale Kontaktlinse nach Anspruch 1, wobei die innere Abdeckung und der innere interstitielle Hohlraum jeweils einen Durchmesser von mindestens 10 mm aufweisen.

5. Sklerale Kontaktlinse nach Anspruch 1, wobei sich der innere und der äußere interstitielle Hohlraum seitlich überlappen und der eine oder die mehreren Luftdurchgänge im Wesentlichen senkrecht sowohl zum inneren als auch zum äußeren interstitiellen Hohlraum ausgerichtet sind.

6. Sklerale Kontaktlinse nach Anspruch 1, wobei die Innenfläche der äußeren Abdeckung eine gemusterte Struktur umfasst.

7. Sklerale Kontaktlinse nach Anspruch 6, wobei die äußere Abdeckung innerhalb der gemusterten Struktur eine Dicke von nicht mehr als 100 um über mindestens 1/3 einer Gesamtfläche der gemusterten Struktur aufweist.

8. Sklerale Kontaktlinse nach Anspruch 1, wobei die gemusterte Struktur eine Fläche von nicht mehr als 100 mm$^2$ bedeckt.

9. Sklerale Kontaktlinse nach Anspruch 1, wobei ein Abstand zu einer nächstgelegenen Stütze an keinem Punkt des äußeren interstitiellen Hohlraums 0,5 mm überschreitet.

10. Sklerale Kontaktlinse nach Anspruch 1, wobei die äußere Abdeckung eine ringförmige Form mit einer Fläche von nicht mehr als 100 mm$^2$ aufweist.

11. Sklerale Kontaktlinse nach Anspruch 1, wobei die Nutzlast eine elektronische Nutzlast ist, die einen Femtoprojektor (114) umfasst, der Bilder auf eine Netzhaut des Auges projiziert.

**12.** Sklerale Kontaktlinse nach Anspruch 11, wobei die Nutzlast eine elektronische Nutzlast ist und wobei die Nutzlast ferner eine Antenne für die Datenkommunikation zur Außenseite der Kontaktlinse, eine Treiberschaltung für den Femtoprojektor, eine Stromquelle und elektrische Zwischenverbindungen umfasst, die die elektrischen Komponenten verbinden.

**13.** Sklerale Kontaktlinse nach Anspruch 1, wobei die Kontaktlinse einen ovalen Umfang hat.

**14.** Sklerale Kontaktlinse nach Anspruch 1, wobei die Nutzlast eine elektronische Nutzlast ist, und wobei eine Außenfläche der äußeren Abdeckung und die Innenfläche der äußeren Abdeckung mit einem hydrophilen Material beschichtet sind.

**15.** Sklerale Kontaktlinse nach Anspruch 1, wobei ein Teil des Kerns, der nicht von der äußeren Abdeckung bedeckt ist, mit einem hydrophilen Material beschichtet ist.

## Revendications

**1.** Lentille de contact sclérale (200) qui se monte sur une sclérotique (106) d'un œil (102), comprenant :

une partie centrale (210) présentant une surface extérieure (212) qui est tournée vers l'extérieur à l'opposé de l'oeil, et une surface intérieure (213) qui est tournée vers l'intérieur en direction d'une cornée (104) de l'œil ; la partie centrale portant une charge utile ;

un revêtement extérieur perméable aux gaz (220) sur la surface extérieure de la partie centrale, le revêtement extérieur et la surface extérieure de la partie centrale formant une cavité interstitielle extérieure (225) entre eux, qui reçoit de l'oxygène provenant de l'environnement extérieur à travers le revêtement extérieur perméable aux gaz ; et

un revêtement intérieur perméable aux gaz (230) sous la surface intérieure de la partie centrale et disposé au-dessus de la cornée de l'œil, le revêtement intérieur et la surface intérieure de la partie centrale formant une cavité interstitielle intérieure (235) entre eux, qui fait passer de l'oxygène vers la cornée de l'œil à travers le revêtement intérieur perméable aux gaz ;

dans laquelle la partie centrale contient un trajet d'air (240) traversant la partie centrale de la cavité interstitielle extérieure jusqu'à la cavité interstitielle intérieure ;

dans laquelle au moins une de la surface extérieure de la partie centrale et de la surface intérieure du revêtement extérieur comprend une structure à motif, la structure à motif présente une pluralité d'évidements intercalés avec une pluralité de supports, la partie centrale et le revêtement extérieur sont en contact l'un avec l'autre au niveau des supports, et les évidements forment la cavité interstitielle extérieure ; et

dans lequel la structure à motif comprend un motif de trous borgnes, et dans lequel le motif de trous borgnes comprend :

une première pluralité de trous borgnes non chevauchants (410), présentant chacun une première profondeur et un premier rayon ; et

une seconde pluralité de trous borgnes (440) recouvrant la première pluralité de trous borgnes,

présentant chacun une seconde profondeur moins profonde que la première profondeur et un second rayon plus grand que le premier rayon, dans laquelle la seconde pluralité de trous borgnes se chevauchent pour former une pluralité de colonnes (430) entre la première pluralité de trous borgnes.

**2.** Lentille de contact sclérale selon la revendication 1, dans laquelle le revêtement extérieur présente une forme annulaire avec un trou central présentant un diamètre d'au moins 5 mm.

**3.** Lentille de contact sclérale selon la revendication 1, dans laquelle la partie centrale inclut un évidement pour le revêtement extérieur, de sorte que le revêtement extérieur et la surface extérieure adjacente de la partie centrale forment une surface lisse pour la lentille de contact.

**4.** Lentille de contact sclérale selon la revendication 1, dans laquelle le revêtement intérieur et la cavité interstitielle intérieure présentent chacun un diamètre d'au moins 10 mm.

**5.** Lentille de contact sclérale selon la revendication 1, dans laquelle les cavités interstitielles intérieure et extérieure se chevauchent latéralement et les un ou plusieurs passages d'air sont orientés sensiblement perpendiculairement aux cavités interstitielles intérieure et extérieure.

**6.** Lentille de contact sclérale selon la revendication 1, dans laquelle la surface intérieure du revêtement extérieur comprend la structure à motif.

**7.** Lentille de contact sclérale selon la revendication 6, dans laquelle, à l'intérieur de la structure à motif, le revêtement extérieur présente une épaisseur non supérieure à 100 μm sur au moins 1/3 d'une surface globale de la structure à motif.

8. Lentille de contact sclérale selon la revendication 1, dans laquelle la structure à motif recouvre une surface non supérieure à 100 mm$^2$.

9. Lentille de contact sclérale selon la revendication 1, dans laquelle une distance à un support le plus proche ne dépasse pas 0,5 mm pour tout point dans la cavité interstitielle extérieure.

10. Lentille de contact sclérale selon la revendication 1, dans laquelle le revêtement extérieur présente une forme annulaire avec une surface ne dépassant pas 100 mm$^2$.

11. Lentille de contact sclérale selon la revendication 1, dans laquelle la charge utile est une charge utile électronique comprenant un femto-projecteur (114) qui projette des images sur une rétine de l'œil.

12. Lentille de contact sclérale selon la revendication 11, dans laquelle la charge utile est une charge utile électronique, et dans laquelle la charge utile comprend en outre une antenne pour une communication de données vers l'extérieur de la lentille de contact, des circuits d'attaque pour le femto-projecteur, une source d'alimentation et des interconnexions électriques qui connectent les composants électriques.

13. Lentille de contact sclérale selon la revendication 1, dans laquelle la lentille de contact présente un périmètre ovale.

14. Lentille de contact sclérale selon la revendication 1, dans laquelle la charge utile est une charge utile électronique, et dans laquelle une surface extérieure du revêtement extérieur et la surface intérieure du revêtement extérieur sont revêtues d'un matériau hydrophile.

15. Lentille de contact sclérale selon la revendication 1, dans laquelle une partie de la partie centrale non recouverte par le revêtement extérieur est revêtue d'un matériau hydrophile.

EP 3 844 561 B1

**Fig. 1A**

22

Peripheral Zone ←→ Central Zone ←→ Peripheral Zone

Contact Lens
100

Tear Fluid Layer
108

Femtoprojector
114

Electronic
Devices 112

Coil 145

Cornea
104

Lens

Sclera
106

Eye 102

TO RETINA

FIG. 1B

Data/control subsystem 150

Eye tracking circuitry 158

Ant. 152

Tx/Rx 154

Display pipeline 156

Back plane 162

Front plane 164

Optics 166

Femtoprojector 160

Power coil 172

Power circuitry 174

Battery 176

Power subsystem 170

FIG. 1C

FIG. 2

FIG. 3A

FIG. 3B

FIG. 3C

FIG. 4A

FIG. 4B

FIG. 4C

FIG. 5A

FIG. 5B

FIG. 6A

605

610

605

615

610

FIG. 6B

FIG. 6C

FIG. 7A(1)

DETAIL B FROM FIG. 7A(1)

FIG. 7A(2)

730

735

730

FIG. 7B(1)

DETAIL C FROM FIG. 7B(1)

FIG. 7B(2)

```
┌─────────────────────────────────────┐
│          Form core component         │
│                 805                  │
└─────────────────────────────────────┘
                    │
                    ▼
┌─────────────────────────────────────┐
│   Form outer covering component from │
│        oxygen-permeable material     │
│                 810                  │
└─────────────────────────────────────┘
                    │
                    ▼
┌─────────────────────────────────────┐
│     Form patterned structure on core │
│  component or outer covering component│
│                 815                  │
└─────────────────────────────────────┘
                    │
                    ▼
┌─────────────────────────────────────┐
│   Attach core component to outer     │
│              covering                │
│              component               │
│                 820                  │
└─────────────────────────────────────┘
                    │
                    ▼
┌─────────────────────────────────────┐
│   Lathe down outer surface of core   │
│     component and outer covering     │
│  component to final thickness of     │
│              contact lens            │
│                 825                  │
└─────────────────────────────────────┘
```

FIG. 8

Central Axis 912

Core 904

Cap 902

Base 906

Core 904

900

Cap 902

Outer Air Gap 908

Inner Air Gap 910

Base 906

FIG. 9A

Reg. feature 912a

Reg. feature 912b

Cap 902

Payload Feature 914a

Payload Feature 914b

Core 904

Air Passage 918

Reg. feature (base) 912c

Support Feature 920

Base 908

900

FIG. 9B

Registration Features
912

Payload Feature
214b

Outer Air Gap
908

Payload 216

Cap
902

Core
904

Base
906

Inner Air Gap
910

Air Passage
918

Support Feature
920

t2

t1

Central Zone

Payload Feature
914a

Air Passage
918

900

FIG. 9C

FIG. 10A

Payload (Power Coil)
916

Payload Feature
914

Cap
902

Core 904

1st Interface
1002

Displacer 1008

Wick 1010

Alignment
Stop 1012

2nd Interface
1004

Reservoir
1006

Base 906

FIG. 10B

Central
Interface
1014

Wick 1010

Displacer
1008

Reservoir
1006

Alignment
Stop
1012

FIG. 10C

Core 904

Cap 902

Base 906

Interface 1102

A

FIG. 11A

FIG. 11B

**Fig. 12**

FIG. 13

**EP 3 844 561 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018224671 A1